# EUROPEAN PATENT SPECIFICATION

(11) **EP 1 038 131 B1**
(45) Date of publication and mention of the grant of the patent: **31.03.2004**
(21) Application number: 98964059.4
(22) Date of filing: 17.12.1998
(51) Int. Cl.: F16J 15/34

(54) **NON-CONTACTING MECHANICAL FACE SEAL HAVING CONCENTRIC SEAL FACES**
BERÜHRUNGSFREI LAUFENDE GLEITRINGDICHTUNG, MIT KONZENTRISCHER DICHTFLÄCHE
JOINT MECANIQUE SANS CONTACT PRESENTANT DES SURFACES D'ETANCHEITE CONCENTRIQUES

(30) Priority: 17.12.1997 US 992611; 17.12.1997 US 992613; 17.12.1997 US 992751; 17.12.1997 US 992753; 09.01.1998 US 5957; 26.01.1998 US 13089; 26.01.1998 US 13635; 26.01.1998 US 13698; 02.03.1998 US 33538
(43) Date of publication of application: 27.09.2000
(73) Proprietor: A.W. Chesterton Company, Stoneham, Massachusetts 02180-2999 (US)
(72) Inventor: WU, Shi-Feng, Newburyport, MA 01950 (US); KOWALSKI, Christopher, A., East Hampstead, NH 03826 (US); AZIBERT, Henri, V., Windham, NH 03087 (US)
(74) Representative: Hutchins, Michael Richard
(86) International application number: PCT/US1998/026906
(87) International publication number: WO 1999/031413

(56) References cited:
- US-A- 3 486 760
- US-A- 4 447 063
- US-A- 4 749 199

## Description

### Background of the Invention

The present invention relates generally to seals for providing fluid sealing between a housing and a rotating shaft. More particularly, the invention relates to mechanical face seals in which a fluid is introduced between portions of the seal faces of the seal.

US 4,447,063 discloses a conventional seal having a positively magnetically controlled sealing gap. The seal has a radial plane seal ring gap and comprises a seal ring rotating with a shaft, and a non-rotating seal ring mounted on a housing of the seal through an element which is elastically yielding in every direction and serves as a packing. Sealing fluid flows into the seal ring gap through supply bores and through associate distributing pockets which are provided in the non-rotating seal ring and/or at the outer or inner circumference of the rotating seal ring. Sensors for measuring the seal ring gap are provided in the non-rotating seal ring on the gap side. By means of measured values, electromagnets disposed in the seal housing to face each other and cooperating with opposite magnetizable bodies provided in the non-rotating seal ring, are electronically controlled to maintain a predetermined constant small width of the seal gap.

Conventional mechanical seals are employed in a wide variety of mechanical apparatuses to provide a pressure-tight and a fluid-tight seal between a rotating shaft and a stationary housing. The seal is usually positioned about the rotating shaft, which is mounted in and protrudes from the stationary housing. The seal is typically bolted to the housing at the shaft exit, thus preventing loss of pressurized process fluid from the housing. Conventional mechanical seals include face type mechanical seals, which include a pair of annular sealing rings that are concentrically disposed about the shaft, and axially spaced from each other. The sealing rings each have seal faces that are biased into physical contact with each other. Usually, one seal ring remains stationary, while the other ring contacts the shaft and rotates therewith. The mechanical seal prevents leakage of the pressurized process fluid to the external environment by biasing the seal ring sealing faces into physical contact with each other. As a result of the repeated physical contact between the faces, abrasion of the seal faces occurs and the seals typically exhibit undesirable wear characteristics and leakage.

The prior art attempted to overcome the above difficulties by employing non-contact mechanical seals that utilize a fluid interposed between the seal ring faces to reduce frictional wear. Conventional mechanical non-contact face seals typically employ pumping grooves, such as spiral or Raleigh step grooves, formed in one of the seal faces of the seal rings to develop a hydrodynamic lifting force that separates the seal faces. The resultant gap allows fluid to be disposed between the seal faces to prevent rubbing and abrasion of the seal faces.

One such mechanical seal assembly is described in US 3,486,760 which discloses an assembly for sealing a rotary shaft to a housing, the assembly having a stationary sealing ring with an internal fluid passage through which lubricating fluid is injected into an annular sealing zone between the stationary sealing ring and a complementary, relatively rotatable sealing ring.

Conventional non-contacting face seals, however, exhibit drawbacks in some areas of performance that are less than optimal. For example, in non-contacting seal designs, which rely primarily upon rotation to provide hydrodynamic separation of the seal faces, a substantial amount of seal face abrasion can occur during start-up operation or during periods when the shaft is rotating at low speeds. For this reason, these conventional non-contacting type mechanical face seals are unsuitable for low speed operation or for conditions which require frequent starting and stopping of the shaft.

In order to overcome the problems associated with purely hydrodynamic non-contacting seals, combination hydrostatic and hydrodynamic seals have been designed. Such combination seals typically rely on fluid pressure to provide hydrostatic separation and rotation to provide hydrodynamic separation of the seal faces. The performance of such combination seals has been less than optimal because the thickness of the fluid gap formed between the seal faces varies significantly depending upon rotation speed. Such conventional combination mechanical seals exhibit a substantial difference in fluid film thickness between hydrostatic (i.e., non-rotating) and hydrodynamic (rotating) operation due to the significant pumping force provided by the spiral grooves. The larger gap formed between the seal faces at high rotation speeds allows for greater leakage across the seal faces than would otherwise be desirable.

A significant number of conventional non-contacting seals employ a dual seal arrangement in which three or more seals rings are arranged axially along the shaft. Such dual seals can be arranged in a back-to-back, face-to-face, or tandem configuration and typically employ a high pressure barrier fluid at the outer diameter of the seal rings while maintaining the process fluid at the inner diameter of the seal rings. The barrier fluid is introduced to the seal faces through pumping grooves formed in one of the seal faces.

Dual non-contacting seals have also proven to be less than optimal in a number of areas of performance. Sealing the process fluid at the inner diameter of the seal can result in dirt or other particles within the process fluid becoming clogged between the seal faces, interfering with the operation of the seal. In addition, upon loss of the barrier fluid pressure, some dual seal designs do not maintain a fluid-tight seal, resulting in leakage of the process fluid. The additional seal rings in dual seals also result in an exceedingly bulky seal that is often unsuitable for applications in which the axial space along the shaft is limited. Furthermore, dual seals typically require modification of the housing to accommodate the increased size of the seal, resulting in complex and costly installation and servicing of the seal.

As discussed above, during operation of non-contacting mechanical seals, separation of the seal faces occur to form a gap through which sealed fluid passes. Since passage of the sealed fluid is unavoidable, it is generally desirable in prior art systems to limit the amount of leakage across the seal faces. In order to limit the leakage, the stationary seal ring closely tracks the movement of the rotary seal ring to a large degree. The manipulation of the seal faces and thus of the gap width assists in minimizing fluid leakage.

Prior art mechanical seals typically employ a secondary sealing assembly mounted at the rear of the stationary seal to help bias the stationary seal ring face towards the rotary seal face. The secondary sealing assembly comprises a spring. a spacer and an O-ring. The O-ring is generally mounted between the spacer plate, the stationary seal ring and the fluid housing. The area in which the sealing O-ring is typically mounted undesirably compresses the O-ring in the axial and radial direction, thus significantly increasing the frictional engagement of the seal ring with the fluid housing or other component. The spring and plate generate an axial biasing force that biases the stationary seal ring towards the rotary seal ring to enable the rings to move relative to each other.

A drawback of these secondary seals is the inability of the stationary seal ring to track closely the rotary seal ring because of a phenomena called seal face "hang-up." This typically occurs when either through expansion, contraction or other typical seal ring movement generated during operation, the rotor becomes considerably spaced from the stationary seal ring. The frictional engagement of the secondary seal O-ring prevents the seal ring from tracking the rotary seal ring, and thus from closing this gap. This problem is exacerbated when the mechanical seal is shut-down, and the rotor axially creeps away from the stator. When the seal is subsequently started, the seal face separation results in excessive seal leakage. In some cases, the mechanical seal may resist attempts from the seal rings to create the proper seal. Replacement of the seal components is then necessary.

As the above described and other prior art seals have proven less than optimal, an object of the present invention is to provide an improved non-contacting mechanical face seal that is operable under a wider range of operating conditions.

Another object of the present invention is to provide a non-contacting mechanical face seal that maintains a fluid-tight seal that is less dependent on shaft speed.

Still another object of the present invention is to provide a non-contacting mechanical seal that minimizes seal face contact at lower shaft speeds and is suitable for applications requiring frequent starting and stopping of the shaft.

Yet another object of the present invention is to provide a non-contacting mechanical face seal that is compact in design and can be installed without modification of the housing.

A further object of the present invention is to provide a non-contacting mechanical seal that can provide the benefits of hydrostatic and hydrodynamic operation simultaneously.

Another object of the present invention is to provide a non-contacting mechanical seal having a sealing structure that alleviates O-ring hysteresis.

Another object of the present invention is to provide a secondary sealing assembly that has relatively low frictional engagement with seal components to enable the seal rings to maintain a proper gap during use.

Other general and more specific objects of this invention will in part be obvious and will in part be evident from the drawings and the description which follow.

### Summary of the Invention

These and other objects of the present invention are attained by a mechanical seal of the present invention which provides fluid sealing between a housing and a rotatable shaft and is suitable for operation over a wide range of operating conditions, including at low shaft speeds.

Accordingly, the present invention provides a mechanical face seal system and a method of inhibiting contact between seal faces as defined in the appended claims.

The seal is preferably a non-contacting seal that provides for the introduction of a fluid, preferably a barrier fluid, between the seal faces. The seal of the present invention includes a first seal ring having a first seal face and a second seal ring having a second seal face. A first surface of the first seal ring and a first surface of the second seal ring are exposed to a first fluid, such as the process fluid. An opening force is developed between the first and second seal faces that inhibits contact between the seal faces. The seal further includes a system for regulating the opening force on the seal face as a function of the difference between the pressure of the fluid introduced between the seal faces and the pressure of the first fluid.

In a preferred embodiment, the first surface of the first seal ring and the first surface of the second seal ring are radial outer surfaces of the seal. In this manner, the first fluid is maintained at the radial outer surfaces of the seal. In the alternative, the first fluid can be maintained at the inner radial surfaces of the seal.

The seal of the present invention can also include a system for developing a closing force on one of the seal rings. Preferably, the seal further includes a system for regulating the ratio of the opening force to the closing force as a function of the pressure difference between the fluid introduced to the seal faces and the first fluid.

The mechanical seal of the present invention preferably employs a plurality of pumping grooves formed in the second portion of the first seal face to produce a hydrodynamic fluid force between at least a portion of the first seal face and at least a portion of the second seal face. Barrier fluid can be introduced to the plurality of pumping grooves formed in the first seal face such that the pumping grooves and the fluid generate a hydrodynamic and a hydrostatic fluid force between the first and second seal faces to separate selectively at least a portion of the first seal face from at least a portion of the second seal face.

In a preferred embodiment, a plurality of passages can be formed within the second seal ring to introduce barrier fluid to the pumping grooves formed in the first seal face. Each passage can open onto the second seal face at one end and can be in fluid communication with a fluid source at another end. A circumferential groove can also be formed in the second seal face and can be positioned on the second seal face such that the passages open onto the circumferential groove. The circumferential groove and the passages are preferably in registration with at least a portion of the pumping grooves formed in the first seal face, such that the passages and the circumferential groove provide fluid to the pumping grooves to generate the hydrodynamic fluid force.

In a preferred embodiment, the seal of the present invention can also include a fluid control system for controlling the separation of the seal faces by adjusting the pressure of the barrier fluid introduced to the grooves. Preferably, the fluid control system adjusts the thickness of the gap formed between the seal faces by adjusting the barrier fluid pressure over the process fluid pressure during operation of the seal.

The mechanical seal of the present invention can include a sleeve for securing the first seal ring to the rotating shaft. The sleeve has a flanged end and is sized for mounting generally concentrically about the rotating shaft. The seal can also include an annular lock ring mounted concentrically about the sleeve for securing the sleeve, and thus the first seal ring, to the rotating shaft. The lock ring can include a plurality of apertures formed therein for receiving fasteners which frictionally engage the rotating shaft to secure the lock ring and the sleeve to the shaft.

The mechanical seal of the present invention can also include a gland assembly sized for mounting to the housing and about the shaft. The gland assembly can be coupled to the second seal ring to connect the second seal ring to the housing and, thus, restrain the second seal ring from rotating. The gland assembly can include an axial inner gland plate and an axial outer gland plate. A resilient member, such as an O-ring, can be interposed between the inner gland plate and the outer gland plate to form a seal therebetween

A resilient member, such as a an O-ring, can be interposed between the second seal ring and the gland assembly to provide a seal between the second seal ring and the gland assembly. A compression member can also be provided for axially and radially biasing the resilient member into contact with the second seal ring and the gland assembly. The compression member is preferably an annular compression plate having an annular inner flanged portion for engaging the resilient member. The inner flanged portion can include an axially and radially extending angled surface for axially and radially biasing the resilient member into contact with the second seal ring and the gland assembly.

The mechanical seal of the present invention can optionally include a system for introducing a closing fluid to a rear surface of the second seal ring to provide the closing force on the second seal ring. The closing force preferably acts upon a portion the second seal face overlapping the second portion of the first seal face. The closing fluid system can include a fluid conduit formed in the outer gland plate that opens proximate the rear surface of the second seal ring at one end and is in fluid communication with a fluid source at another end. Preferably. a common fluid supply provides both the closing fluid to the closing fluid system and barrier fluid for introduction to the seal faces.

The present invention is also attained by the secondary sealing assembly of the present invention for use with a mechanical face seal having a first seal ring, a second seal ring. and a gland assembly. The secondary seal assembly includes a compression member having a front surface and a rear surface, a resilient member positioned between the rear surface of the compression member and the inner surface of the gland assembly for axially biasing the compression plate, and a sealing member interposed between the front surface of the compression member and the rear surface of the first seal ring. The front surface of the compression member is configured to impart an axial and a radial sealing force on the sealing member. The axially and radial sealing force places the sealing member into sealing engagement with the first seal ring and the inner surface of the gland assembly to prevent fluid leakage between the first seal ring and the gland assembly.

The front surface of the compression member can optionally include a first surface and a second surface, the first surface being oriented at angle to the second surface. In a preferred embodiment, the angle between the first surface and the second surface comprises an obtuse angle and, thus, the second surface imparts a radial and an axial force on the sealing member. It is also preferable for the angle defined by the first and second surfaces to be selected to minimize the radial force imparted on the sealing member while concomitantly maintaining the sealing member in sealing contact with the inner surface of the gland assembly. In this manner, the frictional forces between the sealing member and the seal components, i.e., the first seal ring and the gland assembly, is minimized, while still maintaining a fluid seal between the first seal ring and the gland assembly. By minimizing the frictional forces, "hang-up" of the first seal ring by the sealing member is inhibited.

In a preferred embodiment, the rear surface of the first seal ring and the front surface of the compression member form a chamber for receiving the sealing member. The chamber and the secondary sealing assembly are sized to permit thermal expansion of the sealing member in the radial direction during operation of the seal. In this manner. undesirable compression of the sealing member within the chamber, which can result increased frictional forces between the sealing member and first seal ring, is inhibited.

The present invention also provides for a mechanical seal that is suitable for operation over a wide range of operating conditions, including at low shaft speeds. The seal is preferably a non-contacting seal that provides for hydrostatic operation over a portion of one of the seal faces and hydrostatic and hydrodynamic operation over another portion of the seal faces. Accordingly, the mechanical seal of the present invention allows for partial or complete separation of the seal faces independent of shaft speed by having a portion of the seal faces exposed solely to a hydrostatic fluid force. Thus, contact between the seal faces at start-up or at low shaft speeds can be minimized or eliminated thereby reducing wear on the seal faces. Additionally, the mechanical seal of the present invention provides the advantages of hydrodynamic operation at higher shaft speeds, thereby increasing the overall range of effective operating conditions for the seal.

In a preferred embodiment, the mechanical seal of the present invention includes a first seal ring having a first seal face and a second seal ring having a second seal face. The first seal face further has a first portion and a second portion. The seal faces of the first and second seal rings are opposed to each other when assembled. One of the seal rings is adapted to rotate with the rotating shaft, and the other seal ring is restrained from rotating. The seal faces are configured to produce a primarily hydrostatic fluid force between at least a portion of the first portion of the first seal face and at least a portion of the second seal face. In addition, the seal faces are configured to produce a hydrodynamic fluid force and a hydrostatic fluid force between at least a portion of the second portion of the first seal face and at least a portion of the second seal face.

Preferably, the first seal ring has a first outer radially extending seal face at the first portion of the first seal face and a second inner radially extending seal face at the second portion of the first seal face. The first outer seal face and the second inner seal face are generally co-planar. Preferably, the second seal face is sized to overlap at least a portion of the inner and outer seal faces of the first seal ring, thus the seal rings are capable of generating the hydrostatic and the hydrodynamic forces as a result of dam portions formed by the seal face overlap. The first outer seal face can be disposed along an outer circumferential portion of the first seal face and the second inner seal face can be disposed along an inner circumferential portion of the first seal face to form a dual concentric seal on a single seal ring.

The mechanical seal of the present invention preferably employs a plurality of pumping grooves formed in the second portion of the first seal face to produce the hydrodynamic fluid force between at least a portion of the second portion of the first seal face and at least a portion of the second seal face. Barrier fluid can be introduced to the plurality of pumping grooves formed in the first seal face such that the pumping grooves and the fluid generate the hydrodynamic and the hydrostatic fluid forces between the first and second seal faces to separate selectively at least a portion of the first seal face from at least a portion of the second seal face.

In a preferred embodiment, a plurality of passages can be formed within the second seal ring to introduce barrier fluid to the pumping grooves formed in the first seal face. Each passage can open onto the second seal face at one end and can be in fluid communication with a fluid source at another end. A circumferential groove can also be formed in the second seal face and can be positioned on the second seal face such that the passages open onto the circumferential groove. The circumferential groove and the passages are preferably in registration with at least a portion of the pumping grooves formed in the first seal face, such that the passages and the circumferential groove provide fluid to the pumping grooves to generate the hydrodynamic fluid force.

In a preferred embodiment, the seal of the present invention can also include a fluid control system for controlling the separation of the seal faces by adjusting the pressure of the barrier fluid introduced to the grooves. Preferably, the fluid control system adjusts the thickness of the gap formed between the seal faces by adjusting the barrier fluid pressure over the process fluid pressure during operation of the seal.

The mechanical seal of the present invention can include a sleeve for securing the first seal ring to the rotating shaft. The sleeve has a flanged end and is sized for mounting generally concentrically about the rotating shaft. The seal can also include an annular lock ring mounted concentrically about the sleeve for securing the sleeve, and thus the first seal ring, to the rotating shaft. The lock ring can include a plurality of apertures formed therein for receiving fasteners which frictionally engage the rotating shaft to secure the lock ring and the sleeve to the shaft.

The mechanical seal of the present invention can also include a gland assembly sized for mounting to the housing and about the shaft. The gland assembly can be coupled to the second seal ring to connect the second seal ring to the housing and, thus, restrain the second seal ring from rotating. The gland assembly can include an axial inner gland plate and an axial outer gland plate. A resilient member, such as an O-ring, can be interposed between the inner gland plate and the outer gland plate to form a seal therebetween

A resilient member, such as a an O-ring, can be interposed between the second seal ring and the gland assembly to provide a seal between the second seal ring and the gland assembly. A compression member can also be provided for axially and radially biasing the resilient member into contact with the second seal ring and the gland assembly. The compression member is preferably an annular compression plate having an annular inner flanged portion for engaging the resilient member. The inner flanged portion can include an axially and radially extending angled surface for axially and radially biasing the resilient member into contact with the second seal ring and the gland assembly.

The mechanical seal of the present invention can optionally include a system for introducing a closing fluid to a rear surface of the second seal ring to provide a closing force on the second seal ring. The closing force preferably acts upon a portion the second seal face overlapping the second portion of the first seal face. The closing fluid system can include a fluid conduit formed in the outer gland plate that opens proximate the rear surface of the second seal ring at one end and is in fluid communication with a fluid source at another end. Preferably, a common fluid supply provides both the closing fluid to the closing fluid system and barrier fluid for introduction to the seal faces.

These and other objects of the present invention are also attained by a secondary sealing assembly of the present invention for use with a mechanical face seal having a first seal ring, a second seal ring, and a gland assembly. The secondary seal assembly includes a compression member having a front surface and a rear surface, a resilient member positioned between the rear surface of the compression member and the inner surface of the gland assembly for axially biasing the compression plate, and a sealing member interposed between the front surface of the compression member and the rear surface of the first seal ring. The front surface of the compression member may be configured to impart an axial and a radial sealing force on the sealing member. The axially and radial sealing force places the sealing member into sealing engagement with the first seal ring and the inner surface of the gland assembly to prevent fluid leakage between the first seal ring and the gland assembly.

The front surface of the compression member can optionally include a first surface and a second surface, the first surface being oriented at angle to the second surface. In a preferred embodiment, the angle between the first surface and the second surface comprises an obtuse angle and, thus, the second surface imparts a radial and an axial force on the sealing member. It is also preferable for the angle defined by the first and second surfaces to be selected to minimize the radial force imparted on the sealing member while concomitantly maintaining the sealing member in sealing contact with the inner surface of the gland assembly. In this manner, the frictional forces between the sealing member and the seal components, i.e., the first seal ring and the gland assembly, is minimized, while still maintaining a fluid seal between the first seal ring and the gland assembly. By minimizing the frictional forces, "hang-up" of the first seal ring by the sealing member is inhibited.

In a preferred embodiment, the rear surface of the first seal ring and the front surface of the compression member form a chamber for receiving the sealing member. The chamber and the secondary sealing assembly are sized to permit thermal expansion of the sealing member in the radial direction during operation of the seal. In this manner. undesirable compression of the sealing member within the chamber, which can result increased frictional forces between the sealing member and first seal ring, is inhibited.

### Brief Description of the Drawings

These and other features and advantages of the present invention will be more fully understood by reference to the following detailed description in conjunction with the attached drawings in which like reference numerals refer to like elements through the different views. The drawings illustrate principals of the invention and, although generally or occasionally not to scale, may show relative dimensions.
FIG. 1 is a fragmentary view in cross-section of a non-contacting mechanical face seal according to the teachings of the present invention;
FIG. 2 is an exploded unassembled view of the seal components of the non-contacting mechanical face seal of FIG. 1 according to the teachings of the present invention;
FIG. 3 is an exploded unassembled view, from a different perspective than FIG. 2, of the seal components of the non-contacting mechanical seal of FIG. 1 according to the teachings of the present invention;
FIG. 4 is a perspective view of the inner gland plate of the non-contacting mechanical face seal of FIG. 1 according to the teachings of the present invention;
FIG. 5 is a perspective view of the outer gland plate of the non-contacting mechanical face seal of FIG. 1 according to the teachings of the present invention;
FIG. 5A is a side elevational view in cross-section of the outer gland plate of FIG. 5 according to the teachings of the present invention;
FIG. 5B is a partial side elevational view in cross-section of the outer gland plate of FIG. 5 showing the stationary seal ring and the compression plate seated within the outer gland plate;
FIG. 5C is a partial side elevational view in cross-section of the outer gland plate of FIG. 5 showing the stationary seal ring and a second embodiment of the compression plate seated within the outer gland plate;
FIG. 6 is a perspective view of the sleeve for supporting the rotary seal ring of the non-contacting mechanical face seal of FIG. 1 according to the teachings of the present invention;
FIG. 7 is a perspective view of the rotary seal ring of the of the non-contacting mechanical face seal of FIG. 1 according to the teachings of the present invention;
FIG. 7A is a side elevational view in cross-section of the rotary seal ring of FIG. 7;
FIG. 8 is a perspective view of the stationary seal ring of the non-contacting mechanical face seal of FIG. 1 according to the teachings of the present invention;
FIG. 8A is a side elevational view in cross-section of the stationary seal ring of FIG. 8;
FIG. 9 is a perspective view in cross-section of the stationary seal ring of FIG. 8 according to the teachings of the present invention;
FIG. 10 is a perspective view of the compression plate of the non-contacting mechanical face seal of FIG. 1 according to the teachings of the present invention;
FIG. 10A is a side elevational view of the compression plate of FIG. 10;
FIG. 11 is a perspective view of the lock ring of the non-contacting mechanical face seal of FIG. 1 according to the teachings of the present invention;
FIG. 12 is a fragmentary view in cross-section of the non-contacting mechanical face seal of FIG. 1 of the invention with a pressure feedback system mounted within the gland;
FIG. 13 is a fragmentary view in cross section of the non-contacting mechanical face seal of FIG. 12 employing an alternate embodiment of the pressure feedback system;
FIGS. 14A and 14B are side elevational, diagrammatic views in cross-section of the rotary and stationary seal rings of the non-contacting mechanical face seal of FIG. 1, illustrating the various forces acting on the seal rings according to the teachings of the present invention; and
FIG. 15 is a side elevational, diagrammatic view in cross-section of the rotary and stationary seal rings of the non-contacting mechanical face seal of FIG. 1, illustrating the various forces acting on the seal rings during a loss of barrier fluid pressure condition according to the teachings of the present invention.

### Description of the Illustrated Embodiments

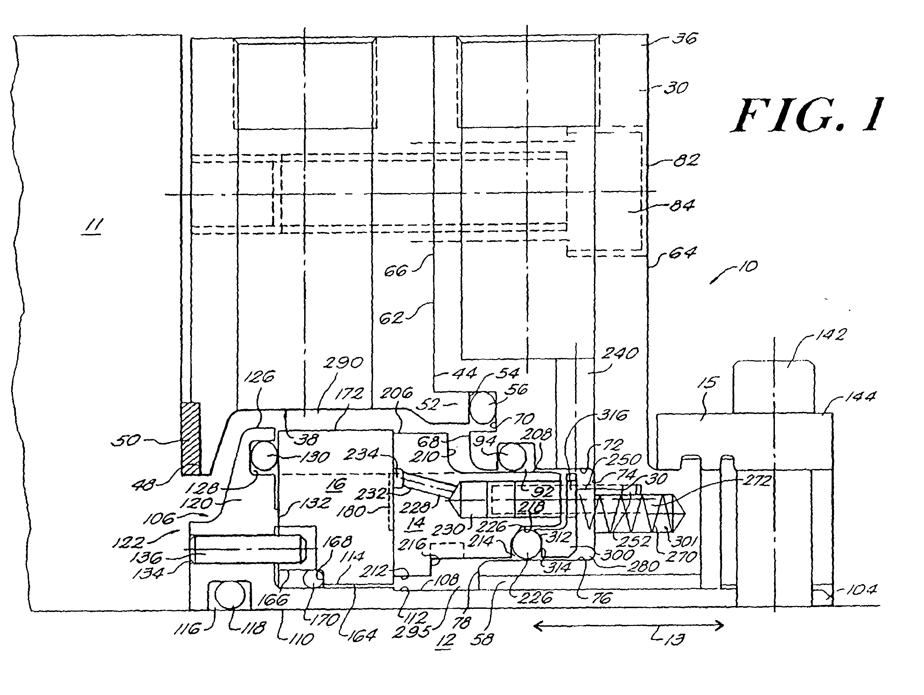

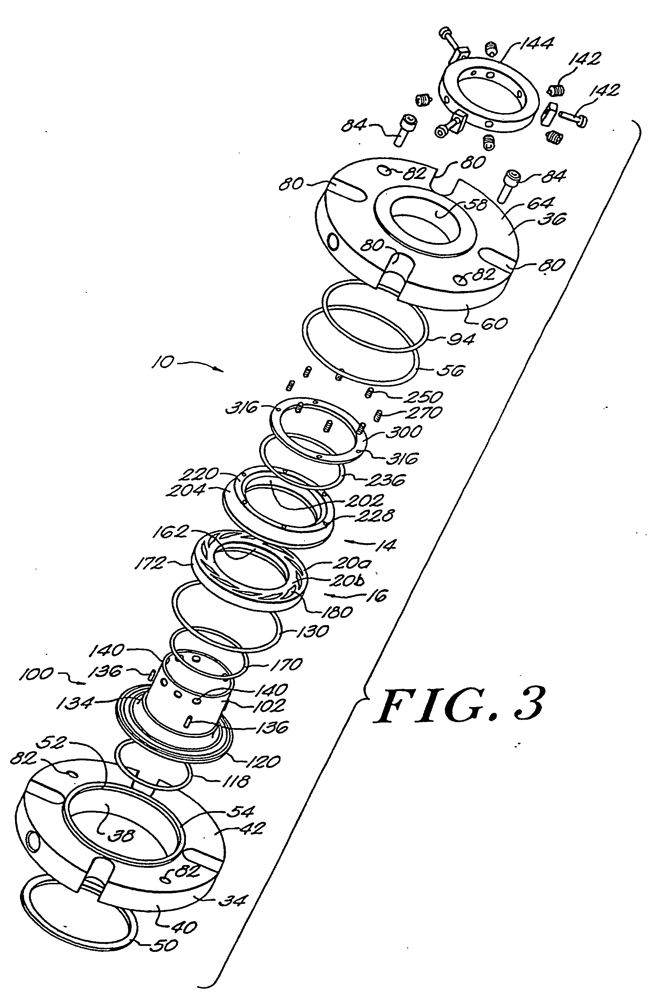

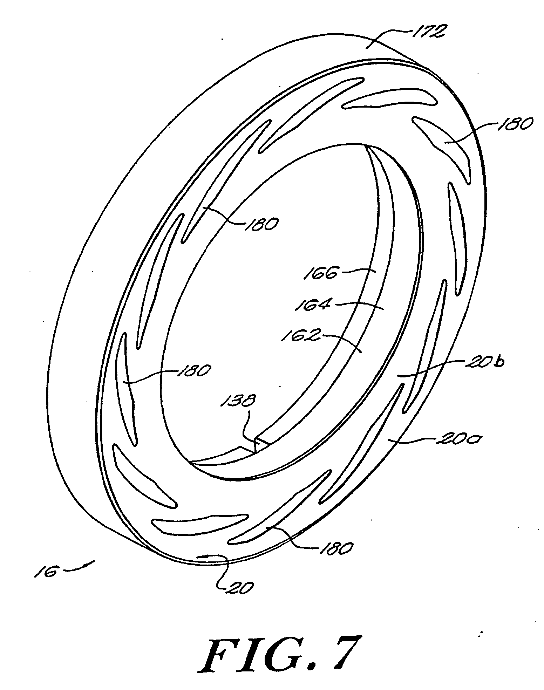

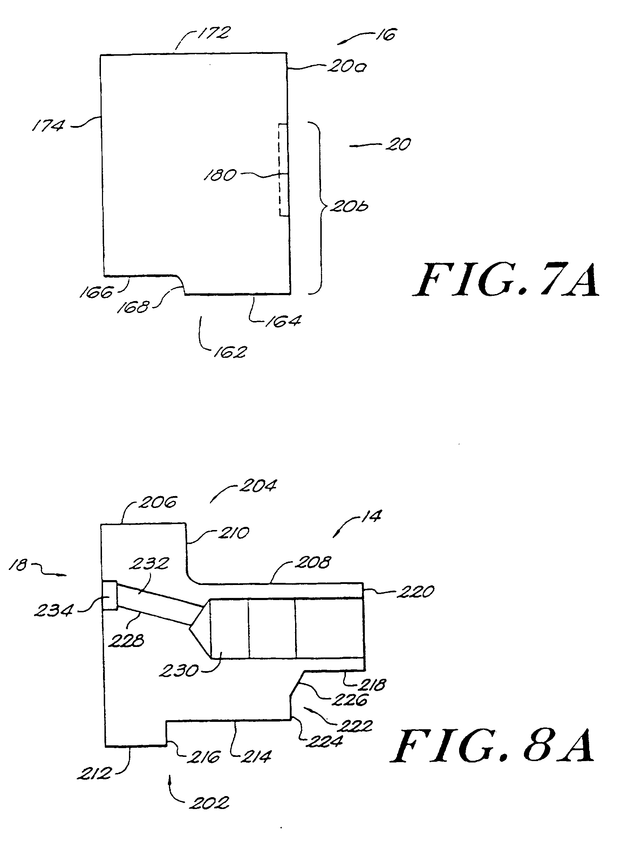

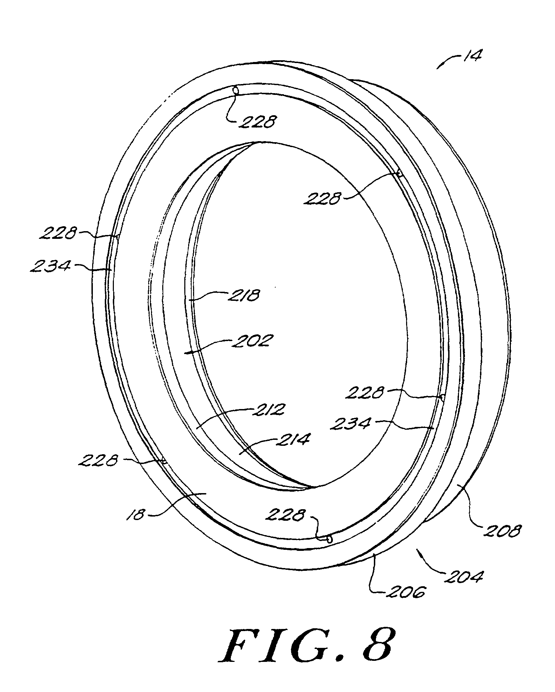

A mechanical face seal 10 in accordance with the present invention is shown in FIGS. 1, 2 and 3. The illustrated mechanical face seal 10 is concentrically disposed about a shaft 12 and is secured to an external wall of a fluid housing 11, such as a pump or the like. The shaft 12 extends along an axis 13, and is mounted, at least partially, in the housing 11. The seal 10 is constructed to provide fluid sealing between housing 11 and shaft 12, thereby preventing a process medium or fluid from escaping the housing 11. Fluid sealing is achieved by a stationary seal ring 14 and a rotary seal ring 16, each ring having a radially extending arcuate seal face 18 and 20, respectively, as shown in FIGS. 7 and 8. The seal face 18 of the stationary seal ring 14 is biased into a sealing relationship with the seal face 20 of the seal ring 16, as described in greater detail below. Thus, these individual seal surfaces form a fluid seal operable under a wide range of operating conditions and in a wide range of services. as described in greater detail below.

The terms "process medium" and "process fluid" used herein generally refer to the medium or fluid being transferred through the housing 11. In pump applications, for example, the process medium is the fluid being pumped through the pump housing.

The terms "axial" and "axially" used herein refer to a direction generally parallel to shaft axis 13. The terms "radial" and "radially" used herein refer to a direction generally perpendicular to shaft axis 13.

The mechanical seal 10 is preferably a mechanical non-contacting-type face seal in which a barrier fluid is introduced between the seal faces 18, 20 of the first and second seal rings 14, 16, respectively. Preferably, the barrier fluid used with the present seal is a gas. In a non-contacting-type mechanical face seal the barrier fluid acts to minimize, inhibit or prevent contact between substantial radial portions of the seal face 18 and radial portions of the seal face 20, thereby reducing the frictional engagement and the resulting wear of the seal faces 18, 20. Accordingly, a non-contacting-type mechanical face seal includes seal designs in which there is total separation of the seal faces at all times, total separation of the seal faces under certain conditions, i.e., during periods of shaft rotation, and occasional or partial separation of the seal faces. In contrast, a contacting-type face seal includes seal designs in which partial or complete contact of the seal faces is maintained. In both types of seals, the barrier fluid functions as a heat transfer medium to transfer heat away from the seal faces to reduce the effects of thermal stress on the seal faces.

With reference to Figures 1 through 5, the illustrated mechanical seal 10 includes, in addition to the stationary seal ring 14 and the rotary seal ring 16, a seal gland assembly 30 and a rotary seal ring sleeve 100. The seal gland assembly 30 includes a pair of gland plates, an inner gland plate 34 and an outer gland plate 36. The inner gland plate 34 is concentrically disposed about the shaft 12 and is positioned adjacent the housing 11 for connection thereto. The outer gland plate 36 is positioned axially adjacent along axis 13 and substantially parallel to the inner gland plate 34.

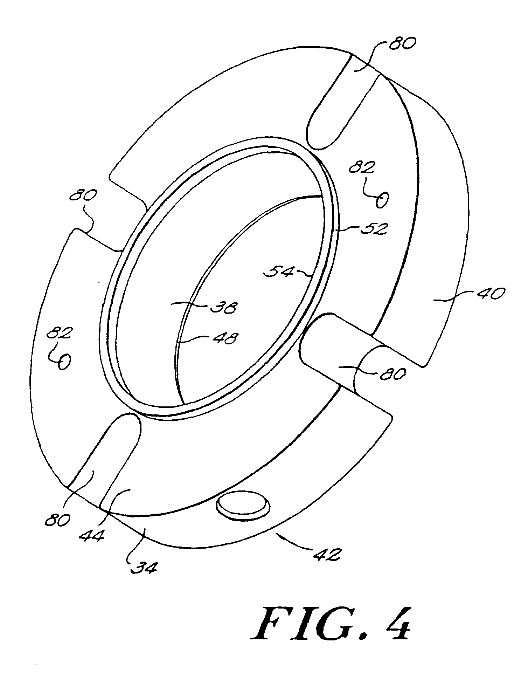

Referring to FIG. 4, the inner gland plate 34 has a radial inner surface 38 and a radial outer surface 40, as well as an axial inner surface 42 and an axial outer surface 44. The inner axial surface 42 is positioned proximate the housing 11 and has a housing gasket groove 48 formed therein adjacent the inner radial surface 38, as best illustrated in FIG. 1. The groove 48 seats a flat, annular housing gasket 50 that preferably has an axial dimension greater than the depth of the groove 48, thereby providing a pressure-tight and a fluid-tight seal between the mechanical seal 10 and the housing 11. The housing gasket 50 is preferably mounted in the groove 48 and secured thereto by an adhesive. This arrangement helps to prevent leakage of the process medium along the mating portions of the mechanical seal 10 and the housing 11 when mounted together.

Referring again to FIGS. 1 through 4, an annular inner gland plate sealing portion or collar 52 extends axially outwardly from the outer surface 44 and includes a radially extending surface 54. The radially extending surface 54 of the inner gland plate sealing portion 52 is dimensioned to abut a gland plate O-ring 56 to provide sealing between the inner gland plate 34 and the outer gland plate 36 when the gland plates are mounted together.

The outer gland plate 36 has an axially extending inner surface 58 and an axially extending outer surface 60, as well as a radially extending inner surface 62 and a radially extending outer surface 64, as shown in FIGS. 1-3, 5 and 5A. Beginning from the outer surface 60, the radial inner surface 62 includes a first radially extending surface portion 66 and a second radially extending surface 68 that is stepped radially inwardly from the first radially extending surface 66. A gland gasket groove 70 is formed in the second radially extending surface 68 adjacent the first radially extending surface 66. An axially extending first surface 72 connects the second radially extending surface 68 and a third radially inwardly extending surface 74. An axially extending second surface 76 connects the third radially extending surface 74 and a fourth radially extending surface 78.

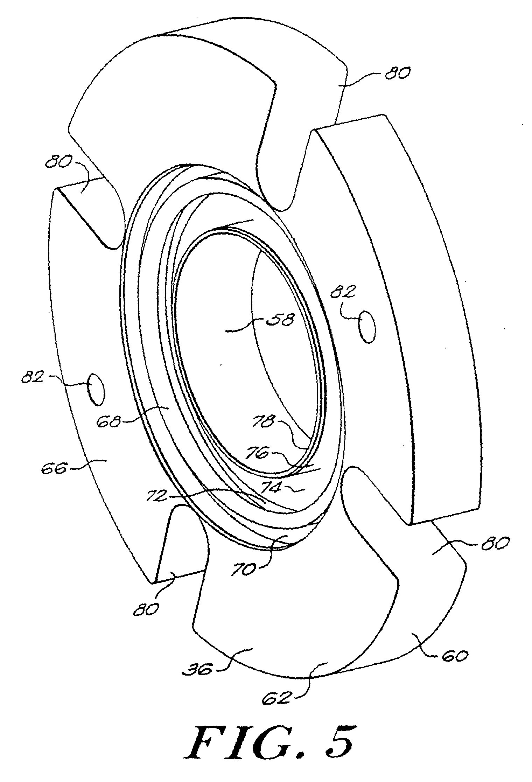

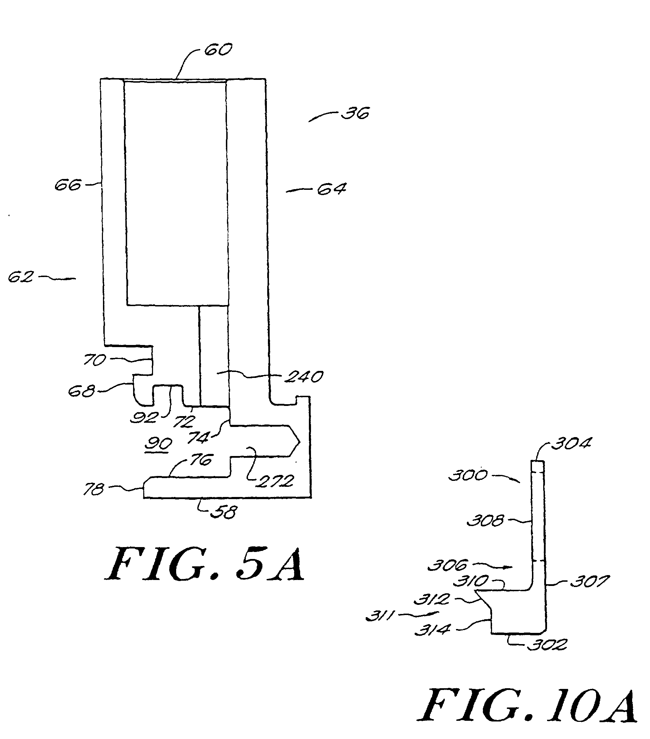

A stationary seal ring receiving chamber 90 is formed by the first surface 72, the third radially extending surface 74, and the second surface 76 of the stationary seal ring 14, as illustrated in FIG. 5A. A groove 92 is formed in the first surface 72 to seat an elastomeric member 94, such as an O-ring, for sealing against the stationary seal ring member 14.

The gland plate O-ring 56 is seated within the gland gasket groove 70 of the outer gland plate 36. When the gland plates 34 and 36 are assembled, the radially extending surface 54 of the inner gland plate sealing portion abuts and compresses the gland plate O-ring 56 into the gland gasket groove 70. In this manner, gland plate O-ring 56 functions to form a fluid-tight and a pressure-tight seal between the gland plates. Furthermore, the outer diameter of the annular collar 52 is slightly smaller than the outer diameter of the groove 70, such that when assembled, the collar 52 outer surface is closely disposed to or mates with the radially outer wall of the groove 70.

Each of the gland plates 34 and 36 include four fastener recesses 80 to accommodate bolts (not shown) to mount mechanical seal 10 of the invention to the housing 11. Alternatively, bolt-tabs may be provided about the periphery of the seal 10 to facilitate connection of the seal 10 to the housing 11. Examples of suitable bolt tabs are shown in U.S. Pat. No. 5,209,496 and U.S. Pat. No. 5.571.268. both of which are assigned to the assignee hereof. Each of the gland plates also include two fastening apertures 82 to accommodate bolts 84 for coupling the inner gland plate 34 to the outer gland plate 36.

As illustrated in FIGS. 1 through 3 and 6, a rotary seal ring sleeve 100 is disposed within the inner chamber formed by the gland assembly 30. The rotary seal ring sleeve 100 includes an axially-extending, cylindrical sleeve body 102 having an axial outer end 104 and an axial inner end 106, as well as an outer surface 108 and an inner surface 110. The outer surface 108 of the sleeve 100 includes a first outer surface 112 proximate the outer end 104 and a second outer surface 114 proximate the inner end 106 and stepped radially outward from the first outer surface 112. In a preferred embodiment, the outer diameter of the first outer surface 112 is less than the diameter of the inner radial surface 58 of the outer gland plate 36. This clearance allows the sleeve 100 to seat within the gland assembly 30 for unobstructed rotational movement therein.

The diameter of the inner surface 110 of the sleeve 100 is preferably equal to or slightly greater than the diameter of the shaft 12, to which the sleeve 100 is to be attached, as illustrated in FIG. 1. The inner surface 110 has formed thereon an annular channel 116 for mounting a shaft gasket 118. When mounted in the channel 116, the gasket 118 sealingly mates with the shaft 12, providing a fluid-tight seat along the sleeve and the shaft interface, FIG. 1.

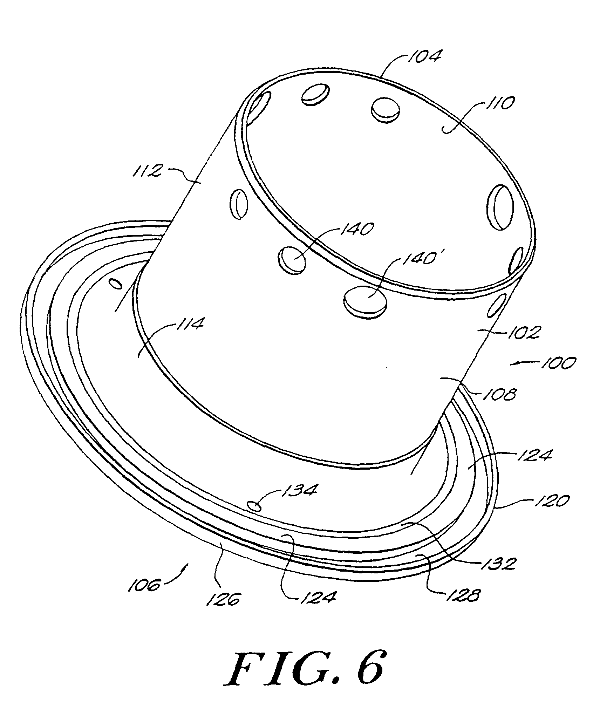

Referring to FIGS. 1 and 6, a flange 120 extends radially outwardly from the sleeve body 102 proximate to the axially inner end 106. The flange 120 has an axially inner surface 122 and an axially outer surface 124. A radial outer surface 126 extends axially between the inner surface 122 and the outer surface 124. Preferably, the diameter of the outer surface 126 is less than the diameter of the inner radial surface 38 of the inner gland plate 34. This clearance allows the flange 120 to seat within the gland assembly 30 for unobstructed rotational movement therein.

The outer surface 124 has an annular groove 128 formed therein for receiving an elastomeric sealing member 130, such as an O-ring, as described in more detail below. A first outer surface 132 is stepped axially outward from the outer surface 124 of the sleeve 100 and is located radially inward from the annular groove 128.

A plurality of bores 134 are formed through the flange 120. each one of which receives one end of a drive pin 136, as illustrated in FIGS. 1 and 6. The other end of the drive pin 136 is received in a corresponding slot 138 in the rotary seal ring 16. The drive pins 136 operate to impart rotational motion to the rotary seal ring 16.

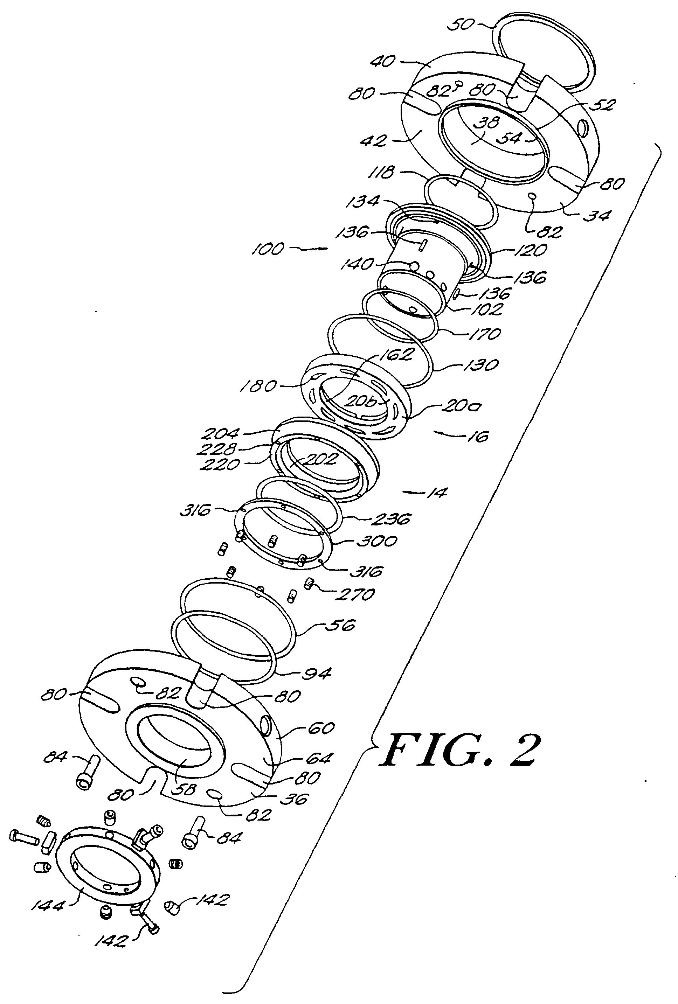

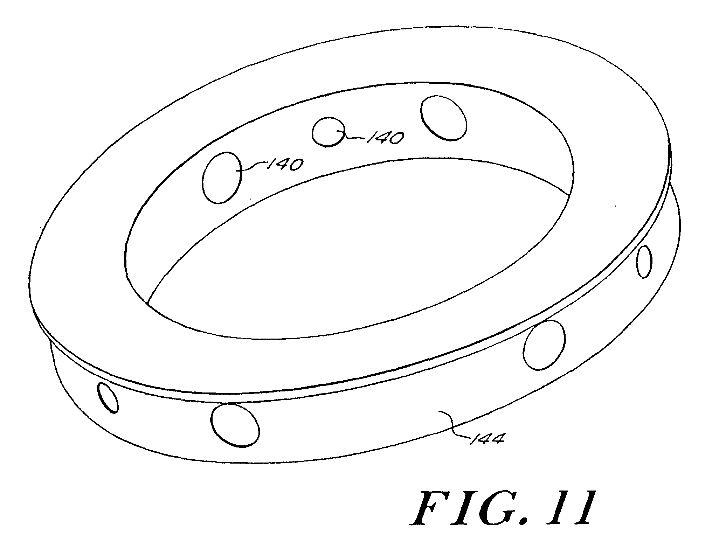

The axial outer end 104 of the sleeve 100 includes a plurality of variously sized fastener-receiving apertures 140 that mount screws 142, as illustrated in FIGS. 2, 3, and 6. The screws are mounted to the sleeve 100 through a lock ring 144, as shown in FIG. 11. The screws 142 are provided to radially and axially secure the sleeve 100, and thus the rotary seal ring 16, to the shaft 12 for rotation therewith.

The rotary seal ring sleeve 100, the gland assembly 30, and the lock ring 144 can be formed from any suitably rigid material, such as, for example, stainless steel or other metal alloys.

With reference to FIGS. 1 through 3, 7 and 7A. the rotary seal ring assembly 16 includes an arcuate inner surface 162. The inner surface 162 includes a first axially extending surface 164 extending axially from the seal face 20 of the rotary seal ring 16. The inner diameter of the first surface 164 of the rotary seal ring is preferably greater than or equal to the diameter of the second outer surface 114 of the sleeve to permit mounting of the rotary seal ring upon the sleeve. A radially extending connecting wall 168 connects the first surface 164 to a second surface 166. The second surface 166 of the rotary seal ring 16 is stepped radially outward from the first surface 164 to accommodate an elastomeric centering member 170, such as an O-ring. The elastomeric centering member 170 seats against the second surface 166 and the connecting wall 168 of the rotary seal ring, as well as the second outer surface 114 of the sleeve 100, to center the rotary seal ring 16 about the sleeve 100.

The rotary seal ring includes a substantially smooth, arcuate axially extending outer surface 172. The diameter of the outer surface 172 is preferably less than the diameter of the inner surface 38 of the inner gland plate 34.

The rotary seal ring 16 includes a rear surface 174 extending radially between the outer surface 172 and the inner surface 166. Elastomeric sealing member 130 sealingly abuts the outer surface 174 of the rotary seal ring 16 and seats within the annular groove 128 to form a fluid-tight, pressure-tight seal between the rotary seal ring and the sleeve. The first outer surface 132 of the sleeve 100 also abuts the rear surface 174 of the rotary seal ring. The first outer surface 132 functions to provide additional supporting of the rotary seal ring on the sleeve and limits the amount of compression of the elastomeric seal ring 130, as well as controlling pivoting or coning of the rotary seal ring under pressure.

The illustrated seal face 20 of the rotary seal ring segments has a plurality of pumping grooves 180 formed therein, as is best shown in FIG. 7. The term "pumping groove" is used herein to denote any type of surface recess formed in one or the other or both of the seal rings which functions in combination with a fluid to generate lifting pressure fields. such as hydrodynamic lifting forces, between the seal faces. The pumping grooves can include any suitable recess configuration, such as spiral grooves and Raleigh step-type grooves, that operate in combination with a fluid to lift and separate the seal faces from each other during use. According to a preferred embodiment, the illustrated grooves are spiral-type grooves that are dependent on shaft speed to separate hydrodynamically the seal faces. For the sake of clarity. the grooves are hereinafter called spiral grooves, although it is to be understood that other types of grooves can be employed. In a preferred embodiment, the spiral grooves 180 are radially disposed between the inner surface 162 and the outer surface 172 of the rotary seal ring 16. The spiral grooves 180 accordingly split the rotary seal ring seal face 20 into two concentric seal faces 20a and 20b. In this manner a dual seal having separate concentric seal faces 20a and 20b on a single seal ring is formed. Referring to FIG. 7A, the first concentric seal face 20a begins at the outer surface 172 and extends to the outer radial edge of the spiral grooves 180. The second concentric seal face 20b extends from either the inner radial edge of the spiral grooves 180 to the inner surface 162 of the rotary seal ring, or in an alternate practice, from the outer radial edge of the spiral grooves 180 to the inner surface 162. The second seal face 20b can thus include the spiral grooves 180 and the land or dam portion of the seal face 20 disposed radially inward from the spiral grooves. According to a preferred embodiment, the concentric seals are co-planar.

When assembled, the stationary seal ring 14 and the rotary seal ring 16 are substantially aligned such that the seal face 18 overlies or is disposed in registration with at least a portion of the seal face 20a, the spiral grooves 180, and the seal face 20b. This arrangement forms dam portions or lands on either side of the grooves 180 that help control or regulate the leakage of fluid through the seal faces 18, 20. According to the illustrated embodiment, the seal face 18 of the stationary seal ring 14 overlies a significant portion of the first concentric seal face 20a and a significant portion of the second concentric seal face 20b.

With reference to FIG. 1, the grooves 180 communicate with the seal face 18 of the stationary seal ring 14. A barrier fluid at a specified regulated pressure P_{b}, generally greater than the process pressure Pₚ and the ambient pressure Pₐ, is introduced to the grooves 180 through barrier fluid conduits 228 formed in the stator seal ring 14, as described in further detail below. The barrier fluid acts to provide a separation force on the seal faces 18 and 20. The separation force operates to minimize, inhibit. or prevent contact between radial portions of the seal face 18 and radial portions of the seal faces 20a and 20b, thereby reducing the frictional engagement and the resulting wearing of the seal faces 18, 20a and 20b.

The type of separation force formed between the seal faces varies radially across the rotary seal face 20. At the first seal face 20a, the separation force is primarily or generally completely a hydrostatic separation force. The terms "hydrostatic separation force" and "hydrostatic force" used herein refer to a force having a magnitude that is independent of the shaft rotation speed and is at least partially and preferably significantly dependent upon the magnitude of any pressure differential developed across the area upon which the force is acting. Accordingly, the magnitude of the primarily hydrostatic separation force acting upon seal face 20a, as well as the corresponding portion of the seal face 18. is at least partially dependent upon the magnitude of the pressure differential between the barrier fluid pressure P_{b} and the process fluid pressure Pp across the seal face 20a and is independent of the speed at which the shaft 12 and thus the rotary seal ring 16 rotates.

The separation force developed between the rotary seal ring second seal face 20b, which for purposes of this discussion includes the spiral grooves 180, and the stationary seal ring seal face 18 includes both hydrostatic and hydrodynamic force components. The terms "hydrodynamic separation force" and "hydrodynamic force" used herein refer to a force having a magnitude that is dependent upon the relative velocity of the seal faces. Accordingly, the magnitude of the separation force acting upon the second seal face 20b, as well as the corresponding portion of the seal face 18, is dependent upon at least two factors: the pressure differential between the barrier fluid pressure P_{b} and the ambient fluid pressure Pₐ across the seal face 20b (the hydrostatic component); and the velocity at which the rotary seal ring seal face 20b rotates relative to the stationary seal ring face 18, i.e., the shaft rotation speed (the hydrodynamic component). The hydrodynamic component of the separation force acting on the rotary seal ring second seal face 20b is generated by the pressure differential created by the pumping action of the spiral grooves 180 in a manner that is known in the art. Those of ordinary skill will recognize that the force distribution can be reversed, that is, the primarily hydrostatic force can be located along the inner diameter, e.g., along seal face 20b, and the hydrostatic and hydrodynamic forces can be located along the outer diameter, e.g., along seal face 20a. One of ordinary skill will recognize that this reverse arrangement may require modification of the groove configuration, as well as changing of the radial location of the barrier fluid conduits on the stationary seal ring seal face 18. This reverse arrangement is particularly suitable for seal applications where the process fluid is disposed along the inner diameter rather than the outer diameter.

A significant advantage of the force distribution feature of the mechanical seal 10 of the present invention is that it allows for adjustment of seal face contact and thus adjustment of the gap thickness formed between the seal faces 18 and 20, prior to start-up, i.e., prior to shaft rotation. By increasing the barrier fluid pressure P_{b} over the process fluid pressure Pₚ, and thus the pressure differential across the seal faces, a hydrostatic separation force can be produced at both the first and second seal faces 20a and 20b of the rotary seal ring. Because the closing force on seal face 20a is only applied by process fluid pressure Pp, as described below, the degree of seal face contact, i.e., the magnitude of the gap between the seal faces, can thus be controlled by adjusting the barrier fluid pressure P_{b} between the seal faces prior to start-up or at low and substantially low rotation speeds. In this manner, contact between the seal faces 18, and 20a, and 20b at start-up or at low shaft speeds can be minimized or eliminated thereby reducing wear on the seal faces. Accordingly, the seal of the present invention provides the benefits of hydrostatic operation at low shaft speeds, while concomitantly providing the high-speed benefits of hydrodynamic operation.

A further advantage of the seal of the present invention is that the seal is not limited to any specific spiral groove configuration. For example, the spiral grooves 180 can be uni-directional or bi-directional grooves. As is known in the art, uni-directional grooves allow for seal face separation only in one direction of shaft rotation, while bi-directional grooves permit separation in both directions of rotation. Examples of suitable spiral groove designs are described in U.S. Patent Nos. 3,499,653, 4,889,348, 5,143,384 and 5,529,315, The illustrated spiral groove is a uni-directional groove that pumps barrier fluid from the high pressure process region of the seal located along the groove 234 of the stationary seal ring 14 to the lower pressure region located along the inner diameter of the rings. Those of ordinary skill will readily recognize that the illustrated seal can also be used with bi-directional grooves, common types of which are known in the art.

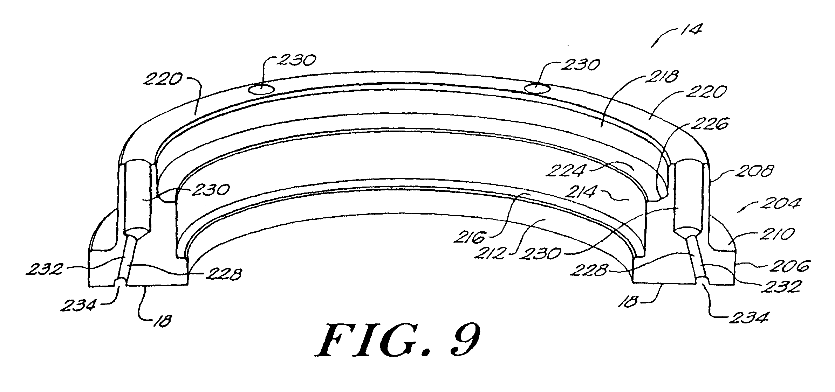

As shown in FIGS. 1, 8, 8A, and 9, the stationary seal ring 14 has an axially extending inner surface 202 and an axially extending outer surface 204. The outer surface 204 includes a first outer surface 206 that extends axially from the stationary seal ring face 18, as well as a further axially extending second outer surface 208 that is stepped radially inward from the first outer surface 206. The first outer surface 206 and the second outer surface 208 form in combination therewith a first annular connecting wall 210 that extends radially between the first and second outer surfaces.

The inner surface 202 includes a first inner surface 212 that extends axially from the stationary seal ring face 18, as well as a further axially extending second inner surface 214 that is stepped radially inward from the first inner surface 206. The first inner surface 212 and the second inner surface 214 form in combination therewith a first annular connecting wall 216 that extends radially between the first and second inner surfaces. A third inner surface 218 extends axially to a rear surface 220 and is stepped radially inward from the second inner surface 214. A second connecting wall 222 connects the second inner surface 214 and the third inner surface 218 and includes a radially extending section 224 and a beveled section 226.

The inside diameter of the first inner surface 212 of the stationary seal ring 14 is greater than the diameter of the first outer surface 112 of the sleeve 100, and is greater than the diameter of the first inner surface 164 of the rotary seal ring 16, thereby allowing motion of both the shaft 12, the sleeve 100 and the rotary seal 16 relative to the stationary seal ring 14. The elastomeric member 94 seats within the outer gland plate groove 92 and abuts the second outer surface 208. A second elastomeric member 236 is positioned to abut the beveled section 226 and the radially extending section 224 of the connecting wall 222 of the stationary seal ring 14, as well as the second surface 76 of the outer gland plate 36. The second elastomeric member 236 is biased into sealing contact with the inner surface 222 of the stationary seal ring 14 and the second surface 76 of the outer gland plate 36, as described in greater detail below. The elastomeric members 94 and 236 function to form fluid-tight and pressure-tight seals between the outer gland plate 36 and the stationary seal ring 14, when the stationary seal ring is positioned within stationary seal ring receiving chamber 90. The stationary seal ring 14 is preferably composed of a carbon or ceramic material.

With reference to FIGS. 1, 8, 8A, and 9, a plurality of barrier fluid bores 228 are formed in the stationary seal ring 14. The bores 228 include an axially extending section 230 that extends axially from the rear surface 220 and a diagonal section 232 that communicates with and extends from the axial section 230 to a continuous, circumferential groove 234 formed in the seal face 18. Barrier fluid from a barrier fluid supply, not shown, is introduced to the seal surfaces 18, 20 of the seal rings and the grooves 180 formed in the seal face 20 through the bores 228 and the groove 234.

One skilled in the art will recognize that the barrier fluid bores are not limited to the number or shape described and illustrated herein. For example, a single barrier fluid bore can be provided. Likewise, the position and arrangement of the barrier fluid bores is not limited to those specifically disclosed herein, as alternative positions and arrangements are possible to achieve the same results. For example, the barrier fluid bores can be formed in rotary seal ring 16, as well a the stationary seal ring 14, and can extend from the seal faces to any outer surface of the seal rings. In addition. the barrier fluid bore can extend linearly from the seal faces 18, 20 to an outer surface of the seal ring.

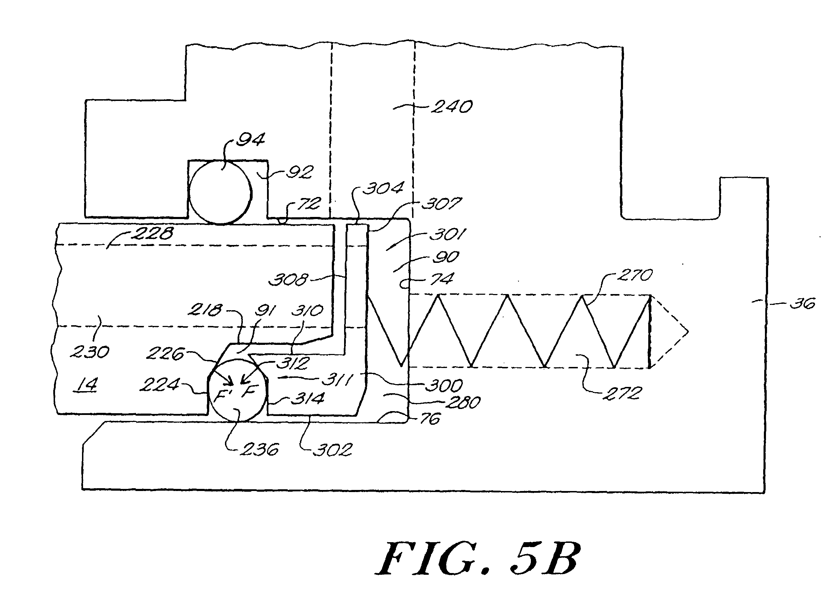

As best shown in FIGS. 1, 5A and 5B, each axial section 230 of the barrier fluid bores 228 opens at the rear surface 220 of the stationary seal ring 14 to provide fluid communication between the bores 228 and a similar radial barrier fluid bore 240 formed in the outer gland plate 36. The bore 240 formed in the outer gland plate 36 opens at one end at the outer surface 60 of the gland assembly and at the other end at the first surface 72 of the outer gland plate 36. Barrier fluid from a barrier fluid supply (not shown) is supplied through the gland bore 240 to each of the stationary seal ring segment bores 228.

A plurality of stationary sealing ring bores 252 are formed within the outer gland plate 36, each one of which receives one end of a retaining pin 250, as illustrated in FIG. 1. The other end of each of the pins 250 is received in the axial section 230 of one of the barrier fluid bores 228 of the stationary seal ring 16. The outer diameter of each of the pins 250 is preferably less than the inner diameter of the axial section 230 of the barrier fluid bores 228 such that barrier fluid can flow around the retaining pins 250. The pins 250 operate to prevent rotation of the stationary seal ring 14 within the outer gland plate 36.

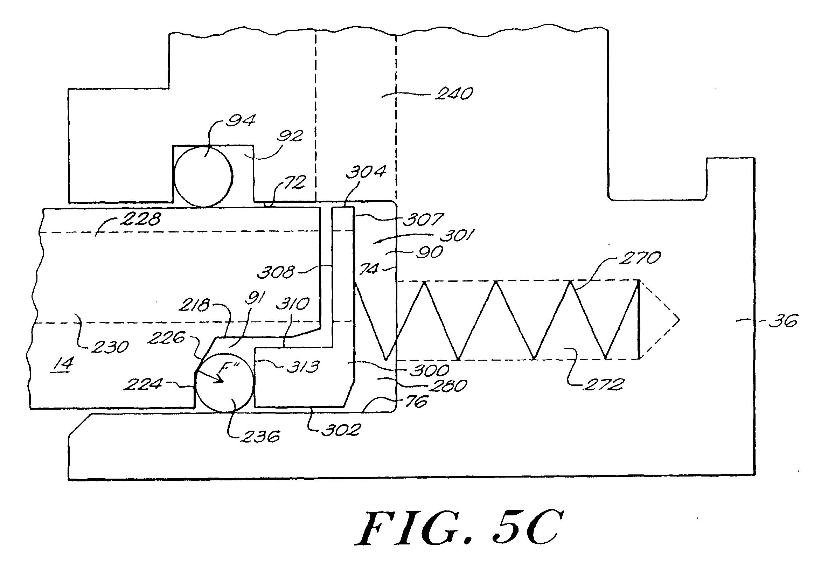

With reference to FIGS. 1, 2, 5B, 5C, 10 and 10A, a secondary sealing assembly 301 is provided and is mounted on the backside of the stationary sealing ring 14 within the closing fluid chamber 280. The secondary sealing assembly 301 forms a fluid seal between the outer gland plate 36 and two fluid environments, a process fluid chamber 290 and an ambient fluid chamber 295, as best illustrated in FIG. 1. The secondary seal assembly 301 permits axial movement of the stationary seal ring 14 when under pressure while concomitantly preventing leakage of fluid between the process fluid chamber 290, the ambient fluid chamber 295, and the closing fluid chamber 280. The secondary sealing assembly 301 includes one or more, and preferably a plurality, of mechanical springs 270, a spacer or compression plate 300. and the elastomeric member 236. The springs 270 are disposed within spring bores 272 formed within the outer gland plate 36, as illustrated in FIGS. 1, 5B, and 5C. The mechanical springs 270 abut the compression plate 300 which in turn abuts elastomeric member 236.

The mechanical springs 270 function to provide an axial force, through the compression plate 300 and the elastomeric member 236, for resiliently supporting the stationary seal ring 14 to bias the stationary seal ring such that the stationary and rotating seal faces 18 and 20 are biased towards each other. As illustrated in FIG. 1, the seal ring 14 is floatingly and non-rigidly supported in spaced relation relative to the rigid walls and faces of the gland plates. This floating and non-rigid support and spaced relationship permits small radial and axial floating movements of the stationary seal ring 16 with respect to the gland, while still allowing the rotary seal face 20 to follow and to be placed into a sealing relationship with stationary seal ring face 18.

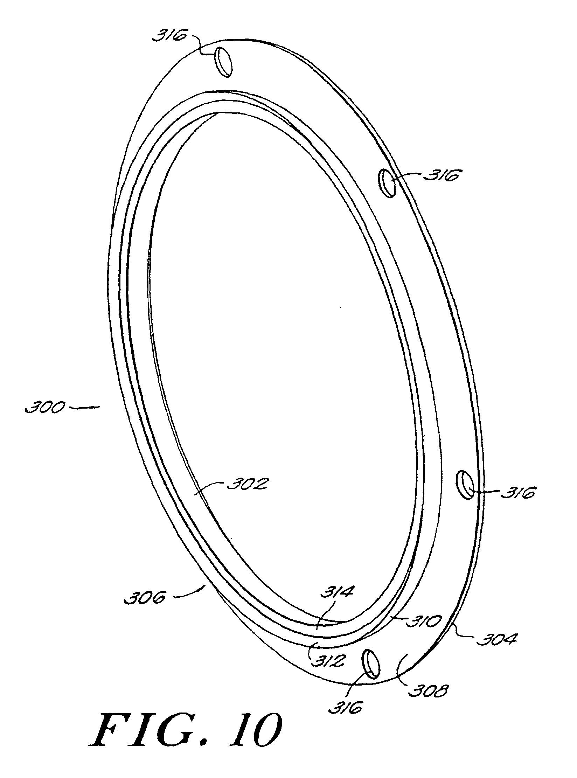

The compression plate 300 includes an inner radial surface 302 and an outer radial surface 304, as best illustrated in FIGS. 5B, 10 and 10A. The diameter of the outer surface 304 of the compression plate 300 is preferably less than the diameter of the first surface 72 of the outer gland plate 36. It is also preferable for the diameter of the inner surface 302 of the compression plate to be greater than the diameter of the second surface 76 of the outer gland plate 6. The compression plate 300 further includes a front surface 306 and a rear surface 307. The front surface 306 has a radially extending first front surface 308. A connecting wall 310 extends axially between the first front surface 308 and a multi-angled or beveled second front surface 311. The connecting wall 310 and the first front surface 308 form a generally right angle therebetween.

An elastomeric member receiving chamber 91 is formed by the radially extending section 224, beveled section 226, and the inner section 218 of the stationary seal ring; the multi-angled front surface 311 of the compression plate 300; and the gland plate second surface 76, as best illustrated in FIG. 5B. The chamber 91 is sized to accommodate the elastomeric member 236 without requiring an overly tight or compressive fit between the stationary seal ring 14 and the gland 30. Specifically, the elastomeric member receiving chamber 91 is sized to allow for the thermal expansion of the elastomeric member 236 without a significant increase in the compressive force on the elastomeric member, particularly the radial inward component of the compressive force. Preferably, the chamber 91 is dimensioned larger than the pre-compression or pre-stressed (i.e. relaxed) cross-sectional area of the elastomeric member 236.

The increased size of chamber 91 relative to the elastomeric member 236 avoids excessively compressing or squeezing the elastomeric member in a manner that could produce large frictional forces between the elastomeric member 236 and the outer gland plate surface 76. Particularly, the configuration of the chamber 91 allows the elastomeric member 236 to expand radially outward, i.e. in the direction of the inner section 218 of the stationary seal ring, when subjected to thermal stress during the operation of the seal. The freedom of expansion in the radial direction inhibits significant increases in compressive forces on the elastomeric member 236, particularly in the radial direction, during operation of the seal. Thus, the radial inward force on elastomeric member 236 that seats the elastomeric member against the surface 76 of the outer gland plate remains substantially constant during the operation of the seal. This in turn permits the axial frictional force between the elastomeric member 236 and the outer gland plate surface 76 to also be maintained at a substantially constant value during operation, because the magnitude of the axial frictional force is dependent on the magnitude of radial inward force on the elastomeric member. The elastomeric member 236 is thus not pre-disposed to frictionally "hanging up" axial motion of the stationary seal ring 14.

Continuing to refer to FIG. 5B, the multi-angled front surface 311 of the compression plate 300 is a contacting surface which directly biases the elastomeric member 236 into sealing contact with the outer gland plate 36 and the stationary seal ring 14, and includes a plurality, preferably two, angled surfaces 312 and 314. The angled surfaces 312, 314 are transverse to each other and arranged to form an oblique angle or a right angle, and preferably an obtuse angle. The front surface 314 extends radially between the front inner surface 302 and the second front surface 312. According to a preferred practice, the angled front surfaces 312 and 314 directly abut the elastomeric member 236 when the compression plate 300 is seated within the closing fluid chamber 280. Retaining pin bores 316 are formed in the compression plate 300 to permit the stationary seal ring retaining pins 250 to pass therethrough. The illustrated assembly and configuration of the compression plate 300 eliminates the need for a second resilient or compliant component to help bias the elastomeric member in a selected direction to attain a desired compression.

The mechanical springs 270 are coupled to the rear surface 307 of the compression plate 300 to axially bias the compression plate into contact with the elastomeric member 236, as best illustrated in FIG. 5B. The springs 270, through the plate 300, provides a closing force on the stationary seal ring that urges the stationary seal ring 14 toward the rotary seal ring 16. The angled front surfaces 312 and 314 combine to impart a selected compression force F on the elastomeric member 236 to place the elastomeric member 236 into sealing engagement with both the stationary seal ring surfaces 224, 226 and 218 and the outer gland plate surface 76. The angled front surfaces 312 and 314 of the compression plate 300 generate the compression force F having an axial component which acts to bias the elastomeric member 236 into sealing contact with the stationary seal ring 14 and a radial component which acts to bias the elastomeric member 236 into sealing contact with the outer gland plate 36. A resultant compression force F' is further imparted upon the elastomeric member 236 by the beveled surface 226 and the radially extending surface 224 of the stationary seal ring 14. Preferably, the angle of the front surface 312 to the front surface 314, as well as the angle of the surface 226 to the surface 224 of the stationary seal ring 14, is such that the magnitude of the radial force imparted to the elastomeric member 236 is sufficient to sealingly seat the elastomeric member against the outer gland plate surface 236 without producing excessive axial friction or drag forces between the elastomeric member 236 and the outer gland plate. By limiting the drag forces between the elastomeric member 236 and the outer gland plate surface 236, mechanical hysteresis or O-ring hysteresis of the elastomeric member is inhibited. In this manner, a fluid-tight and a pressure tight seal can be maintained between the stationary seal ring 14 and the outer gland plate 36 under a wide range of operating conditions, without unduly limiting the axial motion of the stationary seal ring 14.

A significant advantage of the secondary sealing assembly 301 is that the elastomeric member 236 can seat against the stationary seal ring 14 and the outer gland plate 36 without developing large frictional forces between the elastomeric member and the gland plate that can inhibit axial motion of the stationary seal ring, while concomitantly maintaining sealing between the stationary seal ring and the outer gland plate. Additionally, the secondary seal assembly reduces the number of seal components necessary to create an axial biasing force on the stationary seal ring 14. For example, the secondary sealing assembly does not require additional compliant parts that act in connection with a compression plate to squeeze the O-ring to form the appropriate fluid seal.

An alternative embodiment of the compression plate 300 is illustrated in FIG. 5C, in which the front surface 313 extends radially between the inner surface 304 and the connecting wall 310. In this embodiment, the front surface 313 of the compression plate imparts a primarily axial compression force on the elastomeric member 236. The beveled surface 226 and the radially extending surface 224 of the stationary seal ring 14 in turn impart a compression force F" that acts to place the elastomeric member 236 into sealing engagement with both the outer gland plate surface 76. The resultant compression force F" includes an axial component and a radial component which acts to bias the elastomeric member 236 into sealing contact with the outer gland plate 36 in a manner analogous to the first embodiment of the compression plate 300, described above. Alternatively, the compression plate can be provided with two angled front surfaces and the stationary seal ring can be configured to include only a single radially surface for contacting the elastomeric member. In such an embodiment, the angled front surfaces on the compression plate would impart both a radial and an axial compression force on the elastomeric member.

In addition to the mechanical biasing provided by the mechanical springs 270, an additional fluid biasing system is provided in the seal 10 of the present invention. With reference to FIGS. 1, 5A and 5B, the fluid biasing system includes the radially extending fluid bore 240 which introduces barrier fluid to the rear surface 220 of the stationary seal ring 14 to provide a closing force on the stationary seal ring 14. A fluid-tight and pressure-tight annular closing fluid chamber 280 is formed between elastomeric members 94 and 236, the rear surface 220 of the stationary seal ring 14 and the third axially extending surface 74 of the outer gland plate 36.

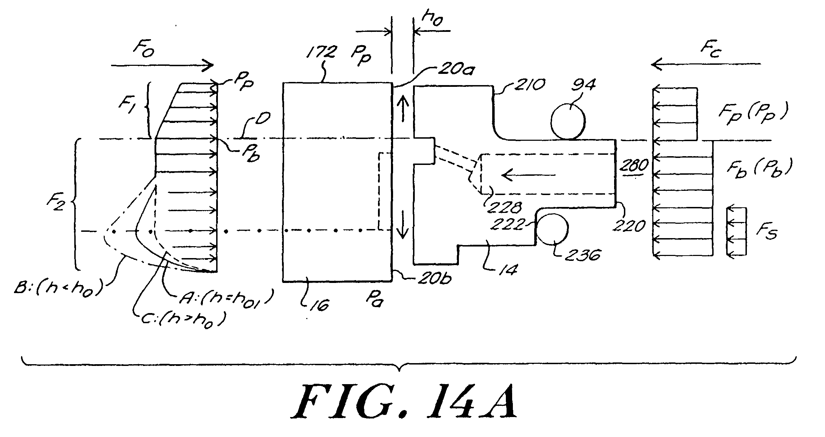

As best illustrated in FIGS. 5B and 14A, a closing fluid at a regulated pressure is provided from a fluid supply (not shown) to a closing fluid chamber 280 through input fluid bore 240. The fluid is preferably a gas. The fluid within the chamber exerts a fluid closing force F_{b} on the stationary seal ring. The fluid closing force F_{b} operates in combination with the mechanical spring closing force Fₛ, and a process fluid force Fₚ, due to the process fluid pressure acting upon the first annular connecting wall 210 of the stationary seal ring 14, to form a combined total closing force F_{c} to bias the seal face 18 toward the seal faces 20a and 20b in a sealing relationship. Preferably, the sum of the fluid closing force F_{b}, the mechanical spring closing force Fₛ, and the process fluid force Fₚ balances the total separation or opening force Fₒ formed at the seal faces to control the separation of the seal faces 18 and 20. In this manner, over separation of the seal faces, which can potentially result in excessive fluid leakage, can be inhibited. In addition, seal face contact can be minimized at all rotation speeds to reduce frictional wear of the seal faces.

The magnitude of the fluid closing force F_{b} can be adjusted or regulated by controlling the pressure of the closing fluid within the closing fluid chamber 280. The ability to adjust the closing force F_{b} acting on the rotary seal ring provides for significant advantages. For instance, the magnitude of the closing force F_{b} can be varied to maintain a sealing relationship between the seal faces 18 and 20 in the event of a change in operating conditions. In the particular embodiment described herein, the closing force is dependent upon the opening force because the barrier fluid is employed as the closing fluid. Consequently, the mechanical seal 10 in combination with a feedback system can dynamically regulate the fluid seal and/or the gap formed between the seal faces 18, 20 to control the amount of leakage during operation. A suitable feedback system is described in detail below.

The illustrated fluid biasing system, which includes the axial bore 228 and the groove 180, provides a simple integrated system that controls the amount of separation of the seal faces to regulate the fluid seal formed between the seal faces. Accordingly, the system can operate in combination with the separation or opening force Fₒ provided by barrier fluid introduced to the seal faces 18, 20 to adjust the degree of seal face contact. Hence, the mechanical seal 10 can regulate or adjust the seal face separation, as well as the fluid seal formed therebetween, over a wide range of operating conditions. This increases the flexibility of the seal and allows the seal to be used in multiple environments.

One skilled in the art will recognize that the seal is not limited to the specific fluid closing system described herein and that alternative fluid closing system arrangements are possible. For example. separate fluid supplies can be used to supply barrier fluid to the seal faces and to supply closing fluid to the rear surface of the stationary seal ring. Those of ordinary skill will recognize that the barrier fluid, process fluid, or some other fluid can be used as the closing fluid. Furthermore, either the mechanical springs 270 or the closing fluid system can be used as the sole source of axial biasing force, eliminating the need for the other axial closing force.

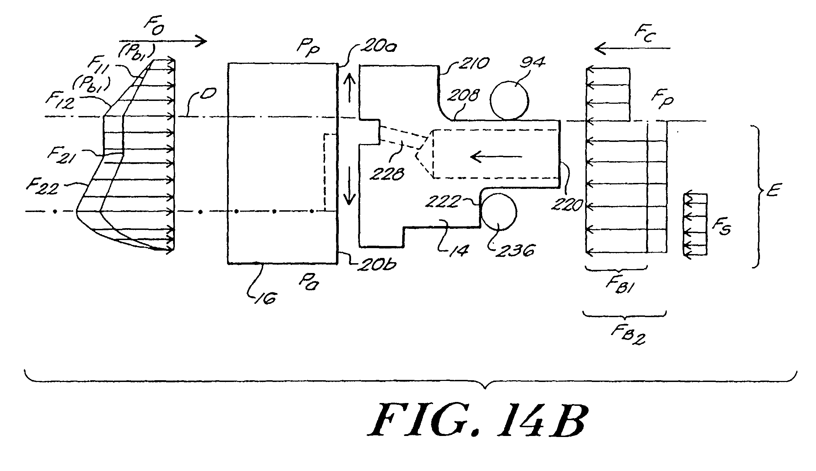

Referring to FIGS. 14A and 14B, the total opening force F₀ that operates in opposition to the closing force F_{c} includes the sum of two forces: F₁ which corresponds to the hydrostatic force formed between concentric seal face 20a and the stationary seal ring face 18, and the force F₂, which corresponds to the combined hydrostatic and hydrodynamic forces formed between the seal faces 20b, when defined to include the grooves 20b, and the seal face 18. According to a preferred practice, the barrier fluid introduced to the seal faces 18, 20 through the fluid biasing system exerts a primarily hydrostatic lifting force, F₁, on the first seal face 20a, as well as on the corresponding portion of the seal face 18, that operates to separate at least a portion of the stationary seal ring face 18 from at least a portion of the rotary seal ring first face 20a to form a gap hₒ therebetween. The magnitude of the primarily hydrostatic separation force F₁ acting upon seal face 20a and the seal face 18 is at least partially dependent upon the magnitude of the pressure differential between the barrier fluid pressure P_{b} and the process fluid pressure Pₚ across the seal face 20a. The hydrostatic separation force F₁ decreases from a maximum value at the outer radial edge of the spiral grooves 180, where the fluid pressure between the seal faces is equal to the barrier fluid pressure P_{b}, to a minimum value at the outer radial edge of the rotary seal, e.g., at the intersection of the first seal face 20a and the outer surface 172. At this point, the fluid pressure between the seal faces is equal to the process fluid pressure Pₚ. The force F₁ acts upon the areas of the seal faces that overlap the first connecting wall 210 of the stationary seal ring 14, i.e., the annular seal face portion that extends radially outward from line D. The hydrostatic separation force F₁ is independent of, and thus does not change as a function of, the speed at which the shaft 12 and thus the rotary seal ring 16 rotates.

The barrier fluid introduced through the axial bore 228 to the grooves 180, and thus to the seal faces 18, 20, exerts a hydrodynamic lifting force F₂ thereon. The force F₂ acts upon a portion of the concentric seal face 20b, when defined to include the grooves 180, as well as on the corresponding portion of the seal face 18, to separate at least a portion of the stationary seal ring face 18 from at least a portion of the rotary seal ring second face 20b to form a gap therebetween. The lifting force F₂ includes both hydrostatic and hydrodynamic components. The magnitude of the separation force F₂ acting upon the second seal face 20b and on the seal face 18 is dependent upon at least two factors: the pressure differential between the barrier fluid pressure P_{b} and the ambient fluid pressure Pₐ across the seal face 20b (the hydrostatic component); and the velocity at which the rotary seal ring seal face 20b rotates relative to the stationary seal ring face 18, i.e., the shaft rotation speed (the hydrodynamic component). The primarily hydrostatic lifting force F₁ and the combination hydrostatic and hydrodynamic lifting force F₂ combine to produce the opening force Fₒ on the seal faces 18 and 20.

The gap formed by the opening force Fₒ is maintained at a predetermined thickness hₒ, or is adjustable, to both minimize leakage across the seal faces and separate the seal faces to reduce wear, as illustrated in FIG. 14A. The predetermined gap thickness hₒ is maintained by the unique balancing system provided by the seal 10 of the present invention in which the opening force Fₒ on the seal faces 18 and 20 is balanced by the closing force F_{c}. The closing force F_{c} includes the process fluid force Fₚ, which acts upon the first connecting wall 210 of the stationary seal ring 14; the barrier fluid closing force F_{b}, which acts upon the rear surface 220 and the second connecting wall 222 of the stationary seal ring 14; and the mechanical spring closing force Fₛ, which also acts upon the second connecting wall 222 of the stationary seal ring 14.

During operation, the opening force Fₒ is balanced by the closing force F_{c} to maintain the gap at a preferred standard thickness hₒ. The magnitude of the lifting force F₂ on the second seal face 20b when the gap is at the preferred thickness hₒ is illustrated by solid line A in FIG. 14A. The curved portion of the line A represents the hydrodynamic component of the lifting force F₂, and has a maximum value that corresponds to the location of the highest pressure fields within the groove 180. If a change in operating conditions results in the thickness h of the gap decreasing below the preferred value hₒ (h<ho), represented by alternately dashed line B, the balancing arrangement of the seal 10 of the present invention compensates by returning the gap to the preferred value hₒ. This occurs since a decrease in the gap thickness results in an increase in the hydrodynamic component of the lifting force F₂, as illustrated by line B. The resulting increase in the lifting force F₂ causes the seal faces to separate until the preferred gap thickness hₒ is again reached.

Likewise, if a change in operating conditions results in the thickness h of the gap increasing above the preferred value hₒ (h>hₒ), the balancing arrangement of the seal 10 of the present invention compensates by returning the gap to the preferred value hₒ. Specifically, the increase in the gap thickness results in a decrease in the hydrodynamic component of the lifting force F₂, as illustrated by dashed line C in FIG. 14A. The resulting decrease in the lifting force F₂ causes the seal faces to come together until the preferred gap thickness hₒ is again reached.

Additionally, the mechanical seal 10 of the present invention allows for the adjustment of the degree or elimination of direct, frictional contact between the seal faces, independent of shaft rotational speed, by adjusting the barrier fluid pressure, and thus the magnitude of the hydrostatic lifting force F1, to produce the desired separation gap.

FIG. 14B illustrates the ability of the mechanical seal 10 to adjust, regulate, or change the opening force Fₒ as a function of the difference between the pressure of two system fluids, for example, the difference between the barrier fluid pressure P_{b} and the process fluid pressure P_{c}. Additionally, the effects of increasing the closing fluid pressure on the stationary seal ring of the mechanical seal 10 during low speed shaft rotation is also shown. As illustrated, increasing the barrier fluid pressure from P_{b1} to P_{b2} results in a corresponding increase in the closing force F_{c} along the portions of the stationary seal ring that are exposed to the closing fluid, designated as E. The closing force portion Fₚ does not increase along the outer radial portion of the stationary seal ring 14, which corresponds to the first connecting wall 210, since the O-ring 94 isolates that outer portion of the stationary seal ring from the closing fluid and thus is only exposed to the process fluid pressure.

The increase in barrier fluid pressure from P_{b1} to P_{b2} within the grooves 180 and thus between the seal faces 18, 20 results in an increase in the opening force Fₒ along the entire radial surface of the seal faces, as illustrated in FIG. 14B by the force lines F₁₁ and F₂₁, which correspond to the initial barrier fluid pressure P_{b1}, and by the force lines F₁₂ and F₂₂, which correspond to the increased barrier fluid pressure P_{b2}. The increase in the opening force from F21 to F22 in the hydrodynamic and hydrostatic region of the seal (e.g., other than from line D to the outer diameter of the seal rings) generally corresponds to the increase in closing pressure from Fb1 to Fb2. However, the increase in opening force from F11 to F12 is not offset by a corresponding increase in the closing force of Fp. More particularly, the portion of the increased primarily hydrostatic lifting force F₁₂ applied to the seal face 20a and that portion of seal face 18 that is radially aligned with the first connecting wall 210 of the stationary seal ring 14, is not balanced by a corresponding increase in the closing force. This occurs because the first connecting wall 210 of the stationary seal ring 14 forms part of the process fluid chamber 295 and as such is exposed solely to the process fluid, and not to the barrier fluid. This unique arrangement thus allows for the opening force Fₒ only to be increased along the outer radial portion of the seal faces, e.g., from line D to the outer diameter of the seal rings, solely by increasing the barrier fluid pressure. Since this portion corresponds to the hydrostatic region along concentric seal face 20a, the increased opening force is independent of shaft rotation speed.

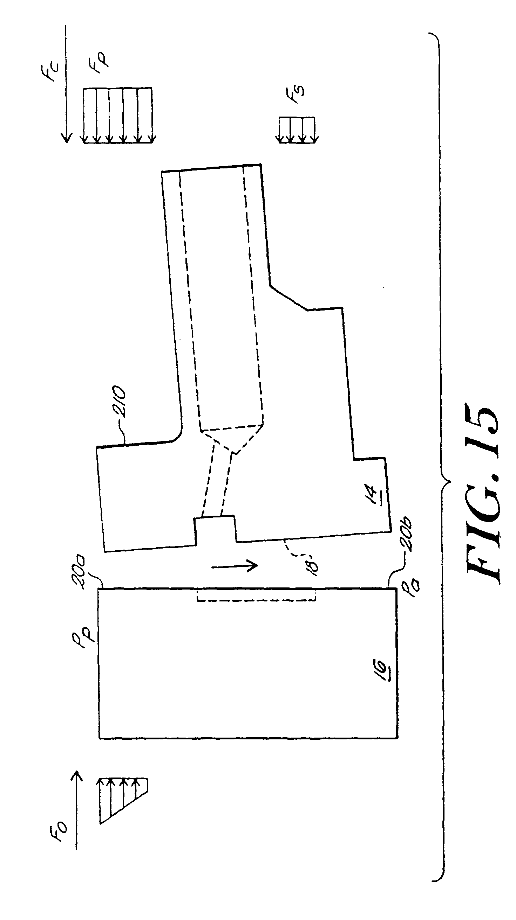

Another advantage of the illustrated seal 10 is that it can continue to operate even when a loss of barrier fluid pressure supplied to the seal faces 18, 20 occurs, as illustrated in FIG. 15. A hydrostatic opening force Fₒ is generated between the seal face 18 and 20a due to the pressure difference between the process pressure P_{b} and the ambient pressure Pₐ. The hydrostatic opening force Fo is opposed by a closing force F_{c} composed of a process fluid force component Fₚ and a spring force component Fₛ. The spiral grooves no longer produce a hydrodynamic lifting force because of the absence of barrier fluid within the grooves. The relatively large pressure differential that forms between the outer diameter region, which is exposed to the process fluid, and the inner diameter region, which is exposed to ambient, does not transport or pump undesirable levels of process fluid across the seal faces to the ambient side of the seal because of the fluid barrier created between the seal faces by the hydrostatic clamping force. Upon loss of barrier fluid the seal thus operates as a partial contact liquid seal.

The mechanical seal 10 of the present invention can include a pressure feedback system that regulates either or both of the closing pressure and the pressure of the barrier fluid supplied to the seal to maintain the desired conditions at the seal faces 18, 20 of the seal rings 14, 16. The pressure control system can include pressure sensors mounted within or at the seal to monitor changes in barrier and closing fluid pressure during operation. The pressure sensors can be coupled to a controller or the like in a closed or open feedback system for adjusting the barrier and/or closing fluid pressure in response to pressure variations due to changes in operating conditions. Examples of pressure feedback systems are disclosed in U.S Patent No. 2,834,619 and U.S. Patent No. 3,034,797.

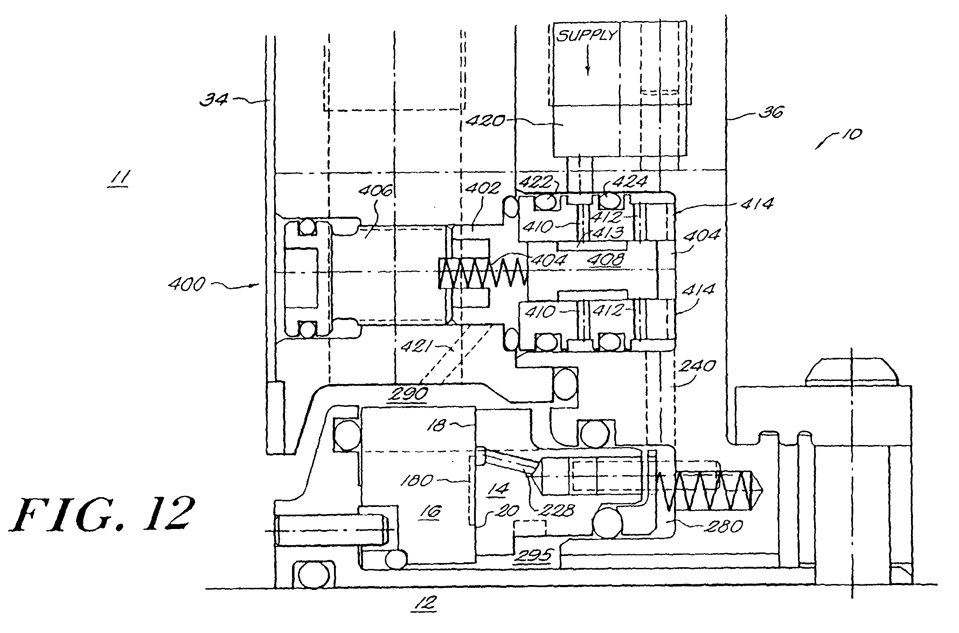

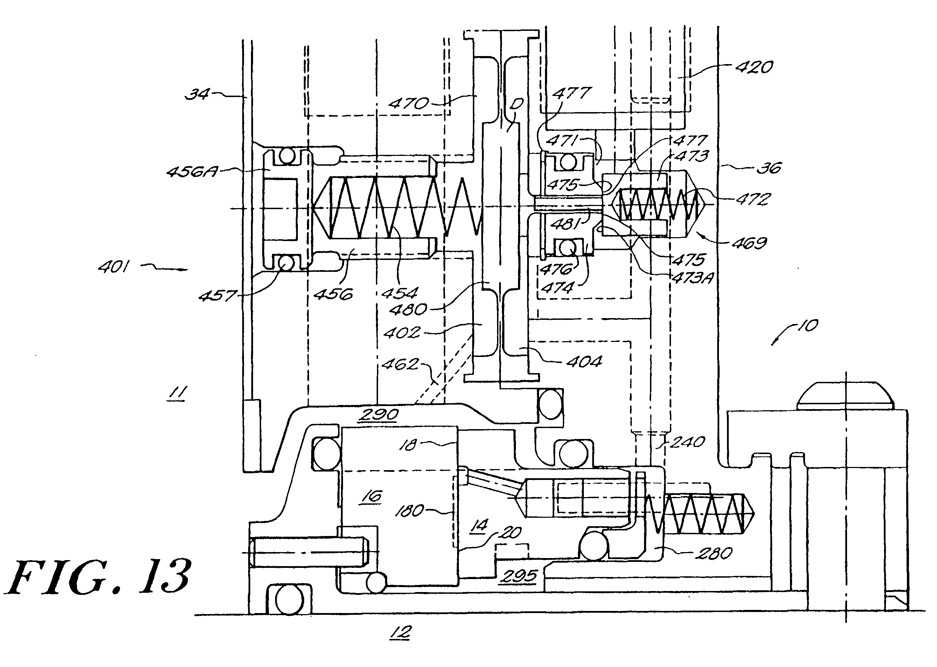

Alternatively, a pressure feedback system can employ one of the system fluids, such as barrier, process or closing fluid, as a regulator fluid input and regulate either the barrier fluid pressure or closing force based on this regulated input In doing this, the pressure feedback system can sense a change in pressure between selected fluid pressures and corrects any imbalance. The pressure feedback system accomplishes this correction by connecting the system to a high pressure fluid supply to add fluid to the system to raise the pressure therein or to vent pressure from the system when internal pressure is above a selected value. Such pressure feedback systems 400 are illustrated in FIGS. 12 and 13.

FIG. 12 illustrates one embodiment of a fluidic feedback pressure regulating system 400 suitable for use with the mechanical seal 10. The feedback system 400 is preferably employed to regulate a system fluid based on the pressure of another system fluid. According to one practice, the system initially sets the barrier fluid pressure at a selected level relative to the process pressure by a selected amount corresponding to a spring pressure. The barrier pressure is then employed as a system output regulated fluid that operates as a system fluid sensor to selectively add a closing fluid to the system 400. The regulated closing fluid corresponds to the closing fluid contained in the closing fluid biasing system discussed above.

The illustrated feedback system 400 is preferably sized and dimensioned for mounting within the inner and outer gland plates 34 and 36. The system is coupled to the seal 10, whose components have been previously described. Therefore, like reference numerals designate like parts. The stationary seal ring 14 includes axial bore 228 that communicates at one end with stationary seal face 18 and at the other end with a barrier fluid source. The rotary seal ring 16 has a pumping groove 180 formed therein and which is positioned to directly fluidly communicate with the axial bore 228. The groove and axial bore operate to channel a barrier fluid directly to the seal faces, between which a hydrodynamic lifting force is created that separates the faces to form a gap therebetween.

The illustrated feedback system 400 employs a movable differential pressure valve 408 disposed within an appropriately sized chamber formed within the glands 34 and 36. The movable valve 408 can include a number of different valves including, but not limited to, spool or shuttle valves, poppet valves, needle valves, diaphragms, bellows, and other like movable valves that are capable of conveying or being acted upon by a pressurized fluid. The chamber mounts an annular fluid manifold 414 that is bored in a selected manner to allow communication between the various pressure passages and bores of the fluidic feedback pressure regulating system. The illustrated fluid manifold 414 has a central bore that seats the movable valve 408. The bore is sized slightly larger than the outermost diameter of the movable valve to allow relatively free axial movement of the valve within the bore between open and closed positions. The fluid manifold 414 includes a number of radially extending fluid bores 410 and 412 to allow the manifold to selectively communicate a particular pressurized fluid to the gland chamber. Sealing structures such as O-rings 422 and 424 are mounted within corresponding grooves formed in the outer surface of the manifold to form a pressure and fluid seal between the inner walls of the chamber and selected portions of the fluid manifold 414.

The movable valve 408 divides the chamber into an input fluid chamber 402 and an output fluid chamber 404, with an intermediate chamber 413 formed between the flanged end portions of the valve. The valve 408 is coupled to an adjustable spring 404, one end of which is attached to a manually adjustable screw 406. The illustrated adjustable screw 406 is mounted in a limited access location to prevent or inhibit personnel from tampering with or adjusting the spring tension from a factory pre-set setting. If necessary, the system operator can adjust the spring tension by accessing and then turning the screw in a selected manner. The screw 406 and the spring 404 thus act in combination to help define an initial or set point pressure for the illustrated pressure regulation subsystem 400.

The screw 406 and spring 404 extend into the input fluid chamber 402 from the interior surface of the gland. The input fluid chamber 402 can communicate with a process fluid distribution network to allow the process fluid of the seal to communicate with the input regulation chamber 402, as designated. The process fluid distribution network of the fluidic feedback pressure regulation system 400 can include, among other structure, appropriate process fluid chambers formed within or about the mechanical seal, such as process fluid chamber 290 and process fluid bore 421 (shown in phantom) that communicates the process fluid from the chamber 290 to the input fluid chamber 402. Those of ordinary skill will recognize that the process fluid distribution network can include that collection of internal bores and passages formed within the gland to enable the process fluid to communicate, if desired, with the movable valve 408 in a selected manner. The regulation system can also employ couplings external of the gland to communicate system fluids with particular portions or components of the system. For example, external fluid conduits can be connected to the gland to transfer the process fluid from the fluid housing to the input process fluid bore 421.

With further reference to Figure 12, the fluidic feedback pressure regulation system 400 can also include a barrier fluid distribution network that communicates barrier fluid from a high pressure barrier fluid supply (not shown) to the fluid manifold 414. The barrier fluid distribution network can include appropriate barrier fluid passages that communicate the barrier fluid from the gland chamber to a separate portion of the seal, including to the barrier fluid biasing system, i.e., axial bore 228 and groove 180, to other feedback systems that can be mounted within the gland, and to other fluid passages/bores such as fluid supply 420 and barrier passage 430. The movable valve 408 defines an intermediate chamber or channel 413 which can communicate with a barrier fluid source through input supply bore 420 and input chamber bore 410. The intermediate chamber 413 is also selectively disposed in fluid communication with the barrier fluid distribution network by way of output barrier bores 412 and 240.

During operation, the process fluid from the housing 11 communicates with the input chamber 402 through the process fluid distribution network. According to one practice, the process fluid is directed from the process chamber 290 to the input chamber 402 through the input process pressure bore 421. The process fluid is at a given operating pressure. The process fluid in the input fluid chamber 402 exerts a pressure on the input side, e.g., the left side, of the movable valve 408. In addition, the adjustable spring 404 exerts a pressure on the movable valve 408. The combination of these two forces or pressures forms the input pressure, which exerts an initial input axial force that biases the movable valve 408 to the right.

The barrier fluid source introduces the barrier fluid to the fluidic feedback pressure regulating system and to the mechanical seal by the barrier fluid distribution network. The barrier fluid from the barrier fluid source is selectively introduced through the input supply passage 420 to the input barrier bore 410 and into the intermediate chamber 413. The barrier fluid is then selectively introduced to the output chamber 404 by selectively biasing the movable valve 408 between open and closed positions. The valve 408 is illustrated in the closed position.

The barrier fluid housed in the output fluid chamber 404 exerts an opposite or axially inward pressure against the right side of the movable valve 408 to form an output pressure. When the output pressure exerted by the barrier fluid is less than the sum of the process fluid pressure and the adjustable spring pressure, the differential pressure valve 408 moves to the right into the open position. This enables the intermediate chamber 413 to communicate with the output barrier bore 412 to provide a fluid pathway from the barrier fluid supply through the fluid supply conduit to the output fluid conduit 412. The barrier fluid then passes through the passage 240 into the axial bore 228, and hence to the remainder of the barrier fluid distribution network. The passage 240 further pressurizes the closing chamber 280.

As the barrier fluid distribution network fills with barrier fluid from the supply source, the barrier fluid pressure in the output fluid chamber 404 increases until the pressure equals or exceeds the sum of the pressures exerted by the process fluid and the adjustable spring 404. When this occurs, the valve 408 is biased into the illustrated closed position to disconnect the barrier fluid supply from the output barrier passage 240. The barrier fluid within the fluidic feedback pressure regulation system is thus pressurized to a level equal to about the sum of the pressures exerted by the process pressure and the variable pressure of the spring 406.

The illustrated system 400 can further include a subsystem for venting the closing fluid from the closing fluid network. The subsystem can include most of the same components as the illustrated subsystem 400, except for the process fluid bore 421 and the barrier fluid bore 240. The subsystems can thus be utilized together or in any combination to control a particular fluid pressure that acts upon, either directly or indirectly, the seal faces 18 and 20. The illustrated subsystem 400 can also be employed to selectively connect a closing fluid supply (not shown) to the closing force biasing system of the seal independent of the barrier fluid system. The closing fluid system applies a closing force to the backside of the stationary seal as a function of the pressure within the barrier fluid distribution network and/or the barrier fluid biasing system, e.g., the axial bore 228 and groove 180.

The closing fluid distribution network of the subsystem connects the source of closing fluid to the stationary seal ring 14. The closing fluid network exerts a closing axial biasing force on the seal ring 14 to adjust or regulate the separation between the stationary and rotary seal rings 14, 16. The closing fluid distribution network can include any suitable arrangement and number of fluid conduits and bores that introduces the fluid to at least one of the seal rings to adjust the separation therebetween. In particular, the illustrated network can include one or more of the input closing force supply passage 420, the input closing fluid bore 410, the intermediate chamber 413, the output closing fluid bore 412, the closing fluid passage 240, and the closing fluid chamber 280. In the illustrated system 400, the barrier fluid system and the closing fluid distribution network share many of the same passages/bores. Consequently, a discrete and dedicated series of fluidly connected passages can be employed to simultaneously pressurize the barrier fluid system and closing fluid network. According to a preferred practice, the closing fluid can be any suitable barrier fluid.

FIG. 13 illustrates another embodiment of the fluidic feedback pressure regulation system 401 of the present invention. The illustrated system 401 employs a diaphragm D as the movable valve. According to one practice, the system 401 preferably disposes the input barrier fluid pressure at a selected level relative to the process fluid pressure and the pressure provided by the spring 454, while concomitantly adding a closing fluid to the system. The operation and function of the illustrated system 401 is similar to the operation of the feedback regulating system 400 of FIG. 12. Like reference numerals refer to similar parts in the Figures.

The gland plates 34 and 36 are bored to form a pair of chambers 470 and 471 that are axially spaced from each other. The chambers are selectively disposed in fluid communication with each other. The diaphragm D is sized and dimensioned to mount within the chamber 470 and divides the chamber into an input fluid chamber 402 and an output fluid chamber 404. The diaphragm D has a bellows portion 480 and an axially extending spindle portion 481 that has a central bore which is open at both ends. The illustrated diaphragm D is coupled to a spring 454, one end of which is attached to a manually adjustable screw 456. The screw 456 includes a head portion 456A which is mounted along the inner surface of the gland at a limited access location. An annular O-ring 457 mounts about the head 456A in a groove to provide a fluid seal between the external environment and the chamber 470. The screw variably adjusts the tension of the spring to either increase or decrease the tension and therefore the pressure of the spring, while concomitantly increasing the pressure within the input chamber 402. The screw 456 and the spring 454 thus act in combination to define the initial or set point pressures in the illustrated pressure regulation subsystem 401. The limited access location of the screw inhibits or prevents a system operator from adjusting the spring tension. which can be pre-set to a selected tension at the factory. Those of ordinary skill will also recognize that the manually adjustable screw 456 can be mounted along the outer surface of the gland.

The screw 456 and spring 454 extend into the input fluid chamber 402 from the axial inner surface of the inner gland plate 34. The input fluid chamber 402 communicates with a process fluid distribution network to allow the process fluid of the seal to communicate with the input chamber 402. The process fluid distribution network of the fluidic feedback pressure regulation system can include appropriate process fluid chambers formed within or about the mechanical seal, such as process fluid chamber 290. and input process fluid passage 462 (shown in phantom) that communicates the process fluid from the chamber 290 to the input fluid chamber 402. Those of ordinary skill will recognize that the process fluid distribution network can include any suitable collection of internal bores and passages formed within the gland that enables the process fluid to communicate with the diaphragm in a selected manner. The regulation system can also employ couplings external of the gland to communicate system fluids with particular portions or components of the system. For example, external fluid conduits can be connected to the gland to transfer the process fluid from the fluid housing to the input process fluid bore 462. In an alternate embodiment, the gland can be internally bored to allow the process fluid to communicate with the process fluid bore completely within the gland without the use of external fluid couplers.

The chamber 471 is formed axially outward relative to the chamber 470. The chamber 471 further communicates on one side with the input fluid supply passage 420. The chamber 471 mounts a spring biasing assembly 469 having a spring 472, an intermediate plate 473 having a U-shaped cross-section, and a fixed annular sealing plug 474. One end of the spring 472 seats at the axially outermost portion of the chamber-471. the other end of which seats within a recess formed in the plate 473. The intermediate plate 473 has a sealing surface 473A that abuts a seating surface 475 formed on one end of the sealing plug 474. The sealing plug 474 has an annular groove that mounts an O-ring 476 that provides a fluid seal between chambers 470 and 471. The plug preferably has a shoulder portion 477 that seats in a mating groove formed in the chamber wall to rigidly and fixedly seat the plug 474 in place. The plug has a central bore 477 that is sized to slidingly seat the spindle portion 481 of the diaphragm D. The plug operates to prevent fluid supplied to the chamber 471 from the fluid passage 420 from communicating with the output chamber 404 when the plate is in intimate facing contact with the seat 475.

The illustrated intermediate plate 473 is alternately disposable between open and closed positions by selected fluid and mechanical forces. When the spring biasing assembly 469 is disposed in the illustrated closed position, the sealing surface 473A contacts in a sealing relation with the seat surface 475 of the plug 474. This position prevents fluid contained in the chamber 471 from communicating with the output chamber 404. When the assembly 469 is disposed in the open position, the plate 473 is axially spaced from the plug 474 to allow the fluid within chamber 471 to pass through the central bore 477 into the output chamber 404.

With further reference to FIG. 13, the axial spindle 481 has an outer end that seats, in a closed position, against the sealing surface 473A of the intermediate plate 473. When disposed in an open position, the spindle disengages from the sealing surface 473A, thus allowing fluid in the output chamber 404 to communicate with the chamber 402 through the spindle's central bore.

In the illustrated system 401, the input fluid chamber 402 is fluidly connected to the process fluid chamber 290 via process fluid bore 462. The output fluid chamber 404 is fluidly connected to the barrier fluid distribution network and the closing fluid network via fluid bore 240. The fluidic feedback pressure regulating system of the invention includes a barrier fluid distribution network that communicates barrier fluid from a high pressure barrier fluid supply to the diaphragm and/or to the barrier fluid biasing network. Further, the system includes a closing fluid network that communicates a closing fluid, such as barrier fluid, to the closing fluid chamber 280.

During operation, the process fluid from the fluid housing communicates with the input chamber 402 through the input process pressure passage 462 and any other appropriately formed passageway within the seal and/or gland that enables the process fluid to enter the input chamber 402. The process fluid is at a given operating pressure. The process fluid in the input fluid chamber 402 exerts a pressure on the input side, e.g., the left side, of the diaphragm D. In addition, the adjustable spring 454 exerts a pressure on the diaphragm D. The combination of these two forces or pressures forms the input pressure, which exerts an initial input axial force that biases the diaphragm towards the right.

The barrier fluid from the barrier/closing fluid supply (not shown) is introduced to the regulation system 401 and to the mechanical seal 16 by the barrier fluid distribution network. According to one practice, the barrier fluid from the barrier fluid supply is selectively introduced to the feedback system, and in particular to the output chamber 404 through supply bore 420. Consequently. the position of the intermediate plate 473 determines whether barrier fluid is introduced to the output chamber 404. The barrier fluid housed in the output fluid chamber 404 exerts an opposite or axially inwardly pressure against the right side of the diaphragm D to form the output pressure.

When the input pressure exerted by the process fluid and the spring 406 is greater than the output pressure within the output chamber 404, the diaphragm D moves to the right, and the spindle 481 separates the plate surface 473A from the seat surface 475. The fluid supply introduces barrier fluid to the chamber 471, which then passes through the central bore 477 of the plug 474 to the output chamber 404. The barrier fluid then passes therefrom to the output passage 240 and into the axial bore 228 and the chamber 280.

As the barrier fluid distribution network fills with barrier fluid from the supply, the barrier fluid pressure in the output fluid chamber 404 increasingly exerts a pressure on the diaphragm D to force it in the opposite direction, e.g., to the left. When the barrier fluid pressure within the output chamber 404 generally equals the sum of the pressures exerted by the process fluid and the adjustable spring 454, the diaphragm D is forced to the left. The spring 472 and the intermediate plate 473, in combination with the barrier fluid pressure within the chamber 471, forces the plate sealing surface 473A back into contact with the seat 475, thereby disconnecting the fluid supply from the output chamber 404. The barrier fluid within the fluidic feedback pressure regulation system 401 is thus pressurized to a level equal to about the sum of the pressures exerted by the process pressure and the selectable pressure of the spring 454. Hence, the barrier fluid within the output chamber 404 is pressurized to a level above the process fluid by an amount corresponding to the tension or pressure of the spring 454. Those of ordinary skill will recognize that the increase in barrier fluid pressure within the output chamber 404 is indicative of low barrier pressure at the seal faces, and thus of impending seal face contact. The addition of barrier fluid to the seal faces through the axial bore 228 and the groove 180 pressurizes the gap at the seal faces to separate the seal faces.

In assembly, the rotary seal ring 16 is mounted onto the sleeve 100 by aligning the drive slots 138 of the rotary seal ring with axially extending drive pins 136, which extend from drive bore 134 of the holder assembly. The centering member 170 is concentrically disposed about the sleeve and is further placed into contact with the inner surface 166 of the rotary seal ring. Likewise, the O-ring 130 is disposed within annular groove 128 formed in the sleeve 100 and is further placed in sealing contact with the rear surface 174 of the rotary seal ring 16.

The stationary seal ring 14 and the compression plate 300 are mounted within the stationary seal ring receiving chamber 90 of the outer gland plate 36 by disposing the mechanical springs 270 within spring bores 272 of the outer gland plate 36 to abut the rear surface 307 of the compression plate 300. The axial section 230 of the fluid bores 228 and the bores 316 of the compression plate 300 are aligned with the retaining pins 250 extending from the bores 252 formed in the outer gland plate 36. The O-ring 236 is concentrically disposed about the second surface 76 of the outer gland plate and is placed into sealing contact with the radial extending section 224 and beveled section 226 of the stationary seal ring 14. The surfaces 312 and 314 of the compression plate bias the O-ring 236 into sealing contact with both the stationary seal ring 14 and the outer gland plate 36. The O-ring 94 is disposed within groove 92 of the outer gland plate 36 and further placed into contact with the second outer surface 208 of the stationary seal ring 14. The O-rings 94 and 236 accordingly provide for fluid-tight and pressure-tight sealing between the outer gland plate and the stationary seal ring 14.

One skilled with the art will recognize that alternative mechanical spring arrangements are possible, including an arrangement without the compression plate 300 in which the mechanical springs directly contact the rear surface of the stationary seal ring 14.

Gland plate O-ring 56 is then mounted within gland gasket groove 70 and the outer gland plates 36, the sleeve 100, and the stationary and rotary seal rings 14 and 16 are concentrically disposed about the shaft 12. The lock ring 144 is then concentrically disposed about the outer end 104 of the sleeve 100. Screws 142 are inserted through the lock ring into fastener receiving apertures 140 of the sleeve 100. The screws 142 are tightened into frictional engagement with the shaft 12, thereby securing the sleeve 100, as well as the rotary seal ring 14, with the shaft 12.

The inner gland plate 34 is then concentrically disposed about the shaft. The flange 120 of the rotary seal ring sleeve 100 and the rotary seal ring 16 are mounted within the inner gland plate 34. As shown in FIG. 1, the rotary seal ring 16 and the flange 120 of the sleeve 100 are spaced from the inner gland plate inner surface 38, thereby permitting rotation of the sleeve 100 and the rotary seal ring 16 relative to the inner gland plate 34. The gland plates 34 and 36 are next secured together by screws 84 that are mounted in and positively maintained by fastener-receiving apertures 82 in the gland plates. The gland gasket groove 70 abuts radial extending surface 54 of the inner gland plate 34 to provide a pressure-tight and fluid-tight seal between the gland plates 34 and 36.

Prior to fully securing the gland assembly 30 to the housing 11, the shaft 12, the sleeve 100. and the stationary and rotary seal rings 14. 16 are centered within the gland assembly. An example of one type of centering mechanism is illustrated as centering clip 15, as shown in FIG. 1. Examples of other suitable centering mechanisms are described in U.S. Pat. No. 5,571,268, which is assigned to the assignee hereof and which is incorporated herein by reference.

After the seal 10 is assembled and mounted to the pump housing 11. the process medium is sealed within a process fluid chamber 290. as shown in FIG. 1. The process fluid chamber is defined by the inner gland plate inner surface 38, the outer gland plate second surface 68, O-rings 56 and 94, the outer surface of the sleeve 100, the outer surface 172 of the rotary seal ring 16, and the first and second outer surfaces 206, 208 and first connecting wall 210 of the stationary seal ring 14. The ambient medium, typically air, fills an ambient fluid chamber 295, typically sealed from the process chamber 290, that is defined by the stationary and rotary seal ring inner surfaces 162, 202, the O-rings 130 and 236 and the outer surfaces 112 and 114 of the sleeve 100. The terms "ambient" and "ambient medium" are intended to include any external environment or medium other than the process environment or process medium.

Continuing to refer to FIG. 1, the O-ring 118 prevents the seepage of process fluid along the shaft 12. The flat gasket 50 prevents the seepage of process fluid along the housing 11 and the seal 10 interface. The gland plate O-ring 56 prevents seepage of the process fluid between the gland plate interface. The O-rings 94 and 130 prevent process fluid from invading the ambient fluid chamber 295 by way of the sleeve 100 and the gland assembly 30.

In operation, barrier fluid is introduced to the spiral grooves 180 and the seal faces 18, 20a, 20b through barrier fluid bores 228 in the stationary seal ring 14. The barrier fluid fills the gap formed between the seal faces, thereby separating the seal faces 18 and 20 to form a fluid seal between the process medium in the process chamber 290 and the ambient fluid in the ambient fluid chamber 295. The gap is maintained at a predetermined thickness, or is adjustable, to minimize leakage across the seal faces while concomitantly separating the seal faces to reduce wear.

The effects of the barrier fluid on the seal 10 is twofold. First, the barrier fluid can reduce wear on the seal faces by reducing the amount of direct, frictional contact between the seal face 18 and the seal faces 20a and 20b, thus resulting in a longer life for the seal components. Second, the barrier fluid operates to minimally transfer heat generated by the direct, frictional contact between the seal faces away from the seal faces, resulting in a more even temperature distribution throughout the seal 10 and thus prolonging the useful life of the seal components by reducing thermal stress that the components are subjected to.

The barrier fluid exerts a primarily hydrostatic lifting force on the first concentric seal face region 20a, as well as on the corresponding portion of the seal face 18. The seal also develops a hybrid hydrodynamic and hydrostatic force at the grooves 180 and along the inner concentric seal face 20b. The barrier fluid exerts a lifting force on the second seal face 20b, as well as on the corresponding portion of the seal face 18, that operates to separate at least a portion of the stationary seal ring face 18 from at least a portion of the rotary seal ring face 20b to form a gap therebetween.

A significant advantage of seal 10 of the present invention is that a pair of concentric seal faces can be formed on a single seal ring, and preferably on the seal rings of a non-contacting mechanical face seal. The formation of the concentric seals forms a dual seal design employing only a pair of seal rings, although additional seal rings can be used if necessary. This forms a substantially compact mechanical seal, and preferably a compact non-contacting mechanical face seal, that mounts to existing fluid machinery in existing seal spaces, without requiring significant modification of the housing or of surrounding structure in order to accommodate the mechanical seal.

Another significant advantage of the formation of a primarily hydrostatic force along one portion of the rotary seal ring seal face 20 and a combination hydrostatic and hydrodynamic force at another portion of the seal face is that the mechanical seal is capable of operating at relatively low shaft speeds without promoting seal face wear. Further, the addition of the purely hydrostatic portion of the seal face, preferably along one of the concentric seal faces, enables the seal to maintain a seal during barrier fluid loss. This advantage is realized because the mechanical seal employs a balancing arrangement that enables the primarily hydrostatic seal region to form a substantial fluid seal between the process and ambient environments.

Still another significant feature is that the mechanical seal is arranged such that an increase or decrease in barrier fluid pressure relative to the process fluid in the seal produces a corresponding net change in the opening force that separates the seal faces only along the hydrostatic portion of the seal. This pressure arrangement enables the system operator to adjust the opening force by varying the pressure differential between the barrier fluid and the process fluid. This pressure control feature allows substantially precise adjustment of the gap thickness during use.

Additionally, the mechanical seal 10 of the present invention allows for the adjustment of the degree of contact or the thickness of the gap formed between the seal faces, independent of shaft rotation speed, by adjusting the barrier fluid pressure, and thus the magnitude of the hydrostatic lifting force F1, to produce the desired separation gap. Accordingly, it is possible to cause complete or partial separation of the seal faces at start-up, i.e.. when the shaft is not rotating by increasing the barrier fluid pressure. Likewise, complete or partial separation of the seal faces can also occur at low shaft speeds by increasing the barrier fluid pressure.

Still another advantage of the invention is that the secondary sealing structure prevents, minimizes or inhibits seal face hang-up or O-ring hysteresis. Consequently. the seal exhibits increased sealing properties since the separation of the seal faces is maintained within system limits.

One skilled in the art will recognize that the seal 10 of the present invention can be designed as a completely split mechanical seal in which a portion of each of the seal components, e.g. the gland assembly, the sleeve, the stationary and rotary seal rings, and the O-rings, is split. Such a split-seal design facilitates replacement or repair of damaged seal components by permitting installation and removal of the split seal components without necessitating the complete breakdown of the associated equipment, e.g., a pump or the like, and without having to pass the seal over the end of the shaft.

One skilled in the art will recognize that, although only a single seal configuration is described and illustrated herein, the seal 10 of the present invention can be used in a dual or tandem or plural seal configuration in which multiple seals 10 or seal rings are arranged axially along the shaft.

It will thus be seen that the invention efficiently attains the objects set forth above, among those made apparent from the preceding description. Since certain changes may be made in the above constructions without departing from the scope of the invention, it is intended that all matter contained in the above description or shown in the accompanying drawings be interpreted as illustrative and not in a limiting sense.

It is also to be understood that the following claims are to cover all generic and specific features of the invention described herein, and all statements of the scope of the invention which, as a matter of language, might be said to fall therebetween.

Having described the invention, what is claimed as new and desired to be secured by Letters Patent is:

## Claims

1. A mechanical face seal system for providing fluid sealing between a housing (11) and a rotatable shaft (12), the housing being exposed to a process fluid at a process fluid pressure, the system comprising a seal (10) comprising
a first seal ring (16) having a first seal face (20) extending between a first surface (172) and a second surface (164), said first seal face having a first portion (20a) and a second portion (20b),
a second seal ring (14) having a second seal face (18) extending between a first surface (206) and a second surface (212), said first and second seal faces being opposed to each other when assembled, said first surface of said first seal ring and said first surface of said second seal ring being exposed to a first fluid at a first pressure,
one of said first seal ring and said second seal ring being adapted to rotate with the shaft, the other of said first and second seal rings being restrained from rotating,
means (228) for introducing a second fluid at a second pressure between the first and second seal faces, the difference between said first and second pressures developing an opening force between said first and said second seal faces, and said system further comprising
a pressure regulating system (400) coupled to said seal and adjusting the opening force as a function of the difference between the pressures of said first and said second fluids.

2. The mechanical seal of claim 1, wherein said first fluid is the process fluid, and said second fluid is a barrier fluid.

3. The mechanical seal of Claim 1 or Claim 2, wherein the first surface (172) of the first seal ring (16) is a radial outer surface and the first surface (206) of the second seal ring (14) is a radial outer surface.

4. The mechanical seal according to any of the preceding claims, further comprising means (240) for developing a closing force on one of said first seal ring and said second seal ring.

5. The mechanical seal according to Claim 4, wherein the pressure regulating system (400) adjusts the ratio of said opening force to the closing force as a function of the pressure difference between said first fluid and said second fluid to inhibit contact of said seal faces and maintain fluid sealing between the housing and the rotatable shaft.

6. The mechanical seal of claim 1, further comprising
means (180) for producing a hydrodynamic fluid force between at least a portion of said second portion (206) of said first seal face (20) and said second seal face (18), the hydrodynamic fluid force causing separation of a portion said first seal face and a portion of said second seal faces during periods of shaft rotation.

7. The mechanical seal of Claim 6, wherein the difference between said first and second pressures produces a hydrostatic fluid force between at least a portion of said first seal face and said second seal face, said pressure regulating system adjusting the hydrostatic fluid force on said first and second seal faces by adjusting the pressure of the second fluid.

8. The mechanical seal of Claim 7, further comprising means (240) for introducing a closing fluid at a closing fluid pressure to a rear surface (220) of the second seal ring (14) to provide a closing fluid force on said second seal ring.

9. The mechanical seal of Claim 8, wherein said means (240) for introducing a closing fluid and said second seal ring (14) are configured such that the closing force acts upon a portion of the second seal face (18) overlapping said second portion (206) of said first seal face (20).

10. The mechanical seal of Claim 9, wherein said means for introducing a closing fluid and second seal ring are configured such that the closing force does not act upon a portion of said second seal face (18) overlapping said first portion (20a) of said first seal face (20).

11. The mechanical seal of Claim 9, wherein said pressure regulating system (400) regulates said closing force by adjusting the closing fluid pressure.

12. The mechanical seal of Claim 11, wherein said pressure regulating system (400) balances the closing force with the sum of said hydrostatic fluid force and said hydrodynamic fluid force to inhibit contact of said seal faces during operation and maintain fluid sealing between the housing and the rotatable shaft.

13. The mechanical seal of Claim 9, wherein said pressure regulating system adjusts the hydrostatic fluid force on said first and second seal faces by adjusting the pressure of said second fluid or adjusts said closing force by adjusting the closing fluid pressure.

14. The mechanical seal of Claim 8, further comprising a gland assembly (30) coupled to said second seal ring (14) for connecting said second seal ring to said housing (11), said gland assembly including an axially inner gland plate (34) and an axially outer gland plate (36), and wherein said means for introducing a closing fluid comprises a fluid conduit (240) formed in said outer gland plate (36), said fluid conduit opening proximate said rear surface (220) of said second seal ring (14) at one end and being in fluid communication with a fluid source at another end.

15. The mechanical seal of Claim 7, wherein said means for producing a hydrodynamic fluid force between at least a portion of said second portion (20b) of said first seal face (20) and said second seal face (18) comprises a plurality of pumping grooves (180) formed in said second portion (20b) of said first seal face (20).

16. The mechanical seal of Claim 15, wherein said means (228) for introducing a second fluid between the first and second seal faces introduces said second fluid to said plurality of grooves (180) and wherein said grooves and said second fluid generate said hydrodynamic fluid force to cause separation of a portion said first seal face (20) and a portion of said second seal face (18) during periods of shaft rotation.

17. The mechanical seal of Claim 16, wherein said means for introducing a second fluid comprises a plurality of axial passages (228) formed within said second seal ring (14), each passage opening onto said second seal face (18) at one end and being in fluid communication with a fluid source at another end.

18. The mechanical seal of Claim 17, wherein said means for introducing a second fluid further comprises a circumferential groove (234) formed in said second seal face (18), said groove being positioned on said second seal face such that said axial passages (228) open onto said circumferential groove.

19. The mechanical seal of Claim 18, wherein said circumferential groove (234) and said axial passages (228) are in registration with at least a portion of said pumping grooves (180) formed on said second portion (20b) of said first seal face (20), such that said axial passages and said circumferential groove provide said second fluid to said pumping grooves to generate said hydrodynamic fluid force.

20. The mechanical seal of Claim 1, further comprising a sleeve (100) for securing one of said first seal ring (16) and said second seal ring (14) to the rotatable shaft (17), said sleeve having a flanged end (20) and being sized for mounting generally concentrically about the rotatable shaft, and means (144) for securing said sleeve to the shaft to rotate therewith.

21. The mechanical seal of Claim 20, wherein said means for securing said sleeve (100) comprises an annular lock ring (144) mounted concentrically about said sleeve and having a plurality of apertures (140) formed therein for receiving fasteners (142) which frictionally engage the rotatable shaft to secure said lock ring and said sleeve thereto.

22. The mechanical seal of Claim 21, further comprising a gland assembly (30) sized for mounting to the housing (11) and about the shaft (12) and coupled to one of said first seal ring (16) and said second seal ring (14) for connecting said one of said seal rings to said housing.

23. The mechanical seal of Claim 22, wherein said first seal ring (16) is secured to said sleeve (100) for rotation therewith, and said second seal ring (14) is secured to said gland assembly (30).

24. The mechanical seal of Claim 23, further comprising a resilient member (236) interposed between said second seal ring (14) and said gland assembly (30) to provide a seal between said second seal ring and said gland assembly, and
compression means (300) for axially and radially biasing said resilient member into contact with said second seal ring and said gland assembly.

25. The mechanical seal of Claim 24, wherein said compression means comprises an annular compression plate (300) having an annular inner flanged portion for engaging said resilient member (236).

26. The mechanical seal of Claim 25, wherein said inner flanged portion includes an axially and radially extending angled surface (311) for axially and radially biasing said resilient member into contact with said second seal ring and said gland assembly.

27. The mechanical face of seal of Claim 1, wherein said first seal ring (16) has a first outer radially extending seal face (20a) at said first portion of said first seal face, and a second inner radially extending seal face (20b) at said second portion of said first seal face, said first outer seal face and said second inner seal face being generally co-planar.

28. The mechanical face seal of Claim 27, wherein the second seal face (18) is sized to overly at least a portion of said inner and outer seal faces (20a,20b) of said first seal ring (16).

29. The mechanical seal of Claim 27, wherein said first outer seal face (20a) is disposed along an outer circumferential portion of said first seal face (20) and said second inner seal face (20b) is disposed along an inner circumferential portion of said first seal face (20) to form a dual concentric seal on a single seal ring.

30. A method of inhibiting contact between the seal faces (14,16) of a mechanical seal (10) for providing fluid sealing between a housing (11) and a rotatable shaft (12), the seal including a first seal ring ( 16) having a first seal face (20), the first seal face having a first portion (20a) and a second portion (20b), and a second seal ring (14) having a second seal face (18), the seal faces of the first and second seal rings being opposed to each other when assembled, the method comprising the steps of,
introducing a fluid between the first seal face (20) and the second seal face (18) to produce a hydrostatic fluid force between at least a portion of the first seal face and at least a portion of the second seal face,
producing a hydrodynamic fluid force between at least a portion of the second portion (20b) of the first seal face (20) and at least a portion of the second seal face (18), the hydrodynamic fluid force causing separation of the seal faces during periods of high speed shaft rotation, and
increasing the hydrostatic fluid force between the first portion (20a) of the first seal face (20) and the second seal face (18) during periods of low speed shaft rotation to inhibit contact between at least a portion of the first portion from at least portion of the second seal face.

31. The method of Claim 30, wherein the step of increasing the hydrostatic fluid force between the first portion (20a) of the first seal face (20) and the second seal face (18) includes the step of increasing the pressure of the fluid introduced between the first portion of the first seal face and the second seal face to increase the hydrostatic fluid force on the first portion and the second seal face.

32. The method of Claim 30, further comprising producing a fluid closing force on a rear surface (220) of the second seal ring (14) to act upon a portion of the second seal face (18) overlapping the second portion (20b) of the first seal face (20).

33. The method of Claim 32, further comprising adjusting one of the primarily hydrostatic fluid force and the fluid closing force to inhibit contact between the first and second seal faces during operation.

34. The method of Claim 32, further comprising increasing the hydrostatic fluid force between the first portion (20a) of the first seal face (20) and the second seal face (18) during periods of low speed shaft rotation to cause separation of at least a portion of the first portion from at least portion of the second seal face.

35. The mechanical face seal (10) of Claim 1, further comprising
a plurality of grooves (180) formed in said first seal face (20) for receiving a barrier fluid introduced to said first and said second seal faces, said barrier fluid being distinct from said process fluid, said plurality of grooves being positioned between an outer land and an inner land of said first seal face to form two concentric seal faces (20a,20b) on said first seal face, and said second seal face being dimensioned to seat over said grooves and at least a portion of said inner land and at least a portion of said outer land when assembled, and
a circumferential groove (234) formed in said second seal face (18) for introducing said barrier fluid to said plurality of grooves (180) formed in said first seal face (20).

36. The mechanical seal of Claim 35, further comprising a plurality of axial passages (228) formed within said second seal ring (14), each passage opening onto said second seal face at one end and being in fluid communication with a fluid source at another end.

37. The mechanical seal of Claim 36, wherein said circumferential groove (234) and said axial passages (228) are in registration with at least a portion of said grooves (180) formed on said first seal face (20) such that said axial passages and said circumferential groove provide fluid to said grooves.

38. The mechanical seal of Claim 35, further comprising a sleeve (100) for securing one of said first seal ring (16) and said second seal ring (14) to the rotatable shaft (12), said sleeve having a flanged end (20) and being sized for mounting generally concentrically about the rotatable shaft (12), and means (144) for securing said sleeve to the shaft to rotate therewith.

39. The mechanical seal of Claim 38, wherein said means for securing said sleeve (100) to said rotatable shaft (12) comprises an annular lock ring (144) mounted concentrically about said sleeve and having a plurality of apertures (140) formed therein for receiving fasteners (142) which frictionally engage the rotatable shaft to secure said lock ring and said sleeve thereto.

40. The mechanical seal of Claim 35, further comprising a gland assembly (30) sized for mounting to the housing (11) about the shaft (12) and coupled to one of said first seal ring (16) and said second seal ring (14) for connecting said one of said seal rings to said housing.

41. The mechanical seal of Claim 40, wherein said gland assembly (30) comprising an axially inner gland plate (34) and an axially outer gland plate (36).

42. The mechanical seal of Claim 41, further comprising a resilient member (56) interposed between said inner gland plate (34) and said outer gland plate (36) to form a seal therebetween.

43. The mechanical seal of Claim 35, further comprising
a gland assembly (30) coupled to said second seal ring (14) for connecting said seal ring to said housing (11),
a sleeve (100) for securing said first seal ring (16) to the rotatable shaft (11), said sleeve having a flanged end (20) and being sized for mounting generally concentrically about the rotatable shaft, and
a lock ring (144) for securing said sleeve to the shaft to rotate therewith.

44. The mechanical seal of Claim 43, further comprising a resilient membe (226) interposed between said second seal ring (14) and said gland assembly (30) to provide a seal between said second ring and said gland assembly, and
a compression plate (300) for axially and radially biasing said resilient member into contact with said second seal ring and said gland assembly.

45. The mechanical seal of Claim 44, wherein said compression plate (300) includes an annular inner flanged portion for engaging said resilient member (226).

46. The mechanical seal of Claim 45, wherein said inner flanged portion includes an axially and radially extending angled surface (311) for axially and radially biasing said resilient member (226) into contact with said second seal ring (14) and said gland assembly (30).

47. The mechanical seal of Claim 35, further comprising a fluid conduit (228) formed through said second seal ring (14), said fluid conduit having an opening at said second seal face for communicating with said plurality of grooves (180) to provide said barrier fluid to said grooves.

48. The mechanical seal of Claims 35 or 47, wherein said barrier fluid received by said grooves (180) generates a hydrodynamic and hydrostatic lifting force between at least a portion of said first seal face (20) and at least portion of said second seal face (18) to separate at least said portion of said first seal face from at least said portion of said second seal face.

49. The mechanical seal of Claims 35 or 48, wherein the pressure difference between said barrier fluid and said process fluid produces a primarily hydrostatic fluid force between said outer land portion (20a) of said first seal face and at least a portion of said second seal face 18.

50. The mechanical seal of Claims 3 5 or 49, further comprising a pressure regulating system (400) for controlling said separation of said seal faces by adjusting the pressure of said barrier fluid introduced to said seal faces.

51. The mechanical seal of Claim 35, further comprising means (240) for introducing a closing fluid to a rear surface (220) of said second seal ring (14) to provide a closing force on said second seal ring.

52. The mechanical seal of Claim 51, wherein said closing force acts upon a portion said second seal face (18) overlapping said plurality of grooves (180) formed in said first seal face (20).

53. The mechanical seal of Claim 52, wherein said closing force does act upon a portion of said second seal face (18) overlapping said outer land (20a) of said first seal face.

54. The mechanical seal of Claim 35, wherein the plurality of grooves (180) formed in said first seal face produces a hydrodynamic fluid force and a hydrostatic fluid force between said first seal face (20) and said second seal face (18) to cause operation of at least a portion of said first seal face from at least a portion of said second seal face.

55. The mechanical seal of Claim 54, further comprising a fluid conduit (228) formed through said second seal ring, said fluid conduit (228) having an opening at said second seal face for communicating with said plurality of grooves (180) to provide said barrier fluid to said grooves.

56. The mechanical seal of Claim 55, further comprising a gland assembly (30) coupled to said second seal ring (14) for connecting said second seal ring to said housing (11), said gland assembly including an axially inner gland plate (34) and an axially outer gland plate (36).

57. The mechanical seal of Claim 56, further comprising a second fluid conduit (240) formed in said outer gland plate (36), for introducing a closing fluid to a rear surface (220) of said second seal ring (14), said second fluid conduit opening proximate said rear surface of said second seal ring at one end and being in fluid communication with a fluid source at another end.

58. The mechanical seal of Claim 57, wherein said second fluid conduit (240) formed in said outer gland plate (36) is in fluid communication with said fluid conduit (228) formed in said second seal ring (14) such that said second fluid conduit supplies fluid from said fluid source to said fluid conduit.

59. The method of inhibiting contact between the seal faces (18,20) of a mechanical seal (10) during operation of the method of Claim 30, wherein the step of
producing a hydrodynamic fluid force between at least a portion of the second portion (20b) of the first seal face (20) and at least a portion of the second seal face (18) also comprises
producing a hydrostatic fluid force between at least a portion of the second portion (20b) of the first seal face (20) and at least a portion of the second seal face (18) also comprises
producing a hydrostatic fluid force between at least a portion of the second portion (20b) of the first seal face (20) and at least a portion of the second seal face (18) to cause separation of at least a portion of the second portion from at least a portion of the second seal face.

60. The mechanical face seal (10) of Claim 1, further comprising
a gland assembly (30) for coupling said first seal to said housing (11), the gland assembly having a inner surface (74,76), and
a secondary sealing assembly for providing fluid sealing between said second seal ring and said gland assembly, said secondary sealing assembly comprising
a compression member (300) having a front surface (306) and a rear surface (3 07),
a spring (270) positioned between said rear surface (307) of said compression member and the inner surface (74,76) of the gland assembly for axially biasing said compression member (300), and
a sealing member (236) interposed between said front surface (306) of said compression member and said rear surface (220) of said first seal ring (14),
one of said rear surface of said first seal ring and said front surface of said compression member having two or more angled surfaces, at least of two of said angled surfaces contacting the sealing member to impart a sealing force on said sealing member, one of said at least two angled surfaces extending and imparting a generally axial force on said sealing member, said sealing force placing said sealing member into sealing engagement with said first seal ring (14) and said inner surface (71) of the gland assembly (30) to prevent fluid leakage between said first seal ring and said gland assembly.

61. The mechanical face seal of Claim 60, wherein the front surface (306) of compression member (300) includes a first surface (314) and a second surface (312), said first surface being oriented at angle to said second surface.

62. The mechanical face seal of Claim 61, wherein said angle between said first surface and said second surface comprises an obtuse angle.

63. The mechanical face seal of Claim 62, wherein said first surface (314) extends radially and imparts a generally axial force on said sealing member (236).

64. The mechanical face seal of Claim 63, wherein said second surface (312) imparts a radial and an axial force on said sealing member (236).

65. The mechanical face seal of Claim 61, wherein the radial force imparted on said sealing member (236) is minimised and said sealing member (236) is maintained in sealing contact with said inner surface (76) of said gland assembly (30) by selecting the angle defined by said first and second surfaces.

66. The mechanical face seal of Claim 61, wherein said rear surface of said first seal ring and said front surface of said compression member form a chamber (91) for receiving said sealing member, said chamber being sized to permit thermal expansion of said sealing member in the radial direction during operation of the seal.

67. The mechanical face seal of Claim 61, wherein said angled surfaces are oriented to form in cooperation with the sealing member a substantially constant radially inward force on said sealing member (236) independent of other structure.

## Patentansprüche

1. Mechanisches Gleitring-Dichtungssystem zur Fluidabdichtung zwischen einem Gehäuse (11) und einer drehbaren Welle (12), wobei das Gehäuse einem unter einem Fluiddruck ausgesetzten Prozessfluid ausgesetzt ist und das System (10) die folgenden Teile umfasst:
einen ersten Dichtungsring (16) mit einer Dichtungsstimringfläche (20), die sich zwischen einer ersten Oberfläche (172) und einer zweiten Oberfläche (164) erstreckt und einen ersten Abschnitt (20a) und einen zweiten Abschnitt (20b) aufweist;
einen zweiten Dichtungsring (14) mit einer zweiten Dichtungsstirnringfläche (18), die sich zwischen einer ersten Oberfläche (206) und einer zweiten Oberfläche (212) erstreckt, wobei die erste und die zweite Dichtungsstimringfläche im zusammengebauten Zustand einander gegenüberliegen und die erste Oberfläche des ersten Dichtungsrings und die erste Oberfläche des zweiten Dichtungsrings einem ersten Fluid mit einem ersten Druck ausgesetzt sind;
wobei der erste Dichtungsring oder der zweite Dichtungsring sich mit der Welle dreht und der andere zweite Dichtungsring oder erste Dichtungsring an einer Drehung gehindert ist;
Mittel (228) zur Einleitung eines unter einem zweiten Druck stehenden zweiten Fluid zwischen die erste und die zweite Dichtungsstimringfläche, wobei die Differenz zwischen dem ersten und zweiten Druck eine Öffnungskraft zwischen der ersten und zweiten Dichtungsstimringfläche entwickelt und wobei das System außerdem
ein Druckregelsystem (400) umfasst, das mit der Dichtung verbunden ist und die Öffnungskraft als Funktion der Differenz zwischen den Drücken des ersten und zweiten Fluid einstellt.

2. Mechanische Dichtung nach Anspruch 1, bei welcher das erste Fluid das Prozessfluid ist und das zweite Fluid ein Barrierefluid.

3. Mechanische Dichtung nach den Ansprüchen 1 oder 2, bei welcher die erste Oberfläche (172) des ersten Dichtungsrings (16) eine radial äußere Oberfläche ist und die erste Oberfläche (206) des zweiten Dichtungsrings (14) eine radial äußere Oberfläche ist.

4. Mechanische Dichtung nach einem der vorhergehenden Ansprüche, welche außerdem Mittel (240) aufweist, um eine Schließkraft auf dem ersten Dichtungsring oder dem zweiten Dichtungsring zu erzeugen.

5. Mechanische Dichtung nach Anspruch 4, bei welcher das Druckregelsystem (400) das Verhältnis zwischen Öffnungskraft und Schließkraft als Funktion der Druckdifferenz zwischen dem ersten Fluid und dem zweiten Fluid einstellt, um eine Berührung der Dichtungsstirnringflächen zu verhindern und eine Fluidabdichtung zwischen Gehäuse und drehbarer Welle aufrecht zu erhalten.

6. Mechanische Dichtung nach Anspruch 1, welcher außerdem
Mittel (180) enthält, um eine hydrodynamische Fluidkraft zwischen wenigstens einem Teil des zweiten Abschnitts (206) der ersten Dichtungsstimringfläche (20) und der zweiten Dichtungsstimringfläche (18) zu schaffen, wobei die hydrodynamische Fluidkraft eine Trennung eines Teils der ersten Dichtungsstimringfläche von einem Teil der zweiten Dichtungsstimringfläche während Perioden der Wellendrehung bewirkt.

7. Mechanische Dichtung nach Anspruch 6, bei welcher die Differenz zwischen dem ersten und dem zweiten Druck einen hydraulischen Fluiddruck zwischen wenigstens einem Teil der ersten Dichtungsstimringfläche und der zweiten Dichtungsstimringfläche erzeugt und das Druckregelsystem die hydraulische Fluidkraft auf der ersten und zweiten Dichtungsstimringfläche durch Einstellung des Druckes des zweiten Fluid einstellt.

8. Mechanische Dichtung nach Anspruch 7, welche weiter Mittel (240) aufweist, um ein Schließfluid unter einem Schließfluiddruck der hinteren Stimringfläche (220) des zweiten Dichtungsrings (14) zuzuführen, um eine Schließfluidkraft auf den zweiten Dichtungsring auszuüben.

9. Mechanische Dichtung nach Anspruch 8, bei welcher die Mittel (240) zum Einführen eines Schließfluid und der zweite Dichtungsring (14) so ausgebildet sind, dass die Schließkraft auf einen Teil der zweiten Dichtungsstirnringfläche (18) wirkt, die den zweiten Abschnitt (206) der ersten Dichtungsstirnringfläche (20) überlappt.

10. Mechanische Dichtung nach Anspruch 9, bei welcher die Mittel zum Einführen eines Schließfluid und der zweite Dichtungsring so ausgebildet sind, dass die Schließkraft nicht auf einen Teil der zweiten Stirnringfläche (18) einwirkt, die den ersten Abschnitt (20a) der ersten Dichtungsstimringfläche (20) überlappt.

11. Mechanische Dichtung nach Anspruch 9, bei welcher das Druckregelsystem (400) den Schließdruck durch Einstellung des Schließfluiddruckes einstellt.

12. Mechanische Dichtung nach Anspruch 11, bei welcher das Druckregelsystem (400) die Schließkraft gegenüber der Summe von hydraulischer Fluidkraft und der hydrodynamischen Fluidkraft ausgleicht, um eine Berührung der Dichtungsstimringflächen im Betrieb zu verhindern und eine Fluidabdichtung zwischen dem Gehäuse und der drehbaren Welle aufrecht zu erhalten.

13. Mechanische Dichtung nach Anspruch 9, bei welcher das Druckregelsystem die hydraulische Fluidkraft auf der ersten und zweiten Dichtungsstimringfläche durch Einstellung des Druckes des zweiten Fluid einstellt oder das Druckregelsystem die Schließkraft durch Einstellung des Schließfluiddruckes einstellt.

14. Mechanische Dichtung nach Anspruch 8, welche außerdem eine Stopfbuchsenanordnung (30) aufweist, die mit dem zweiten Dichtungsring (14) gekuppelt ist, um den zweiten Dichtungsring mit dem Gehäuse (11) zu verbinden, wobei die Stopfbuchsenanordnung eine axial innere Stopfbuchsenplatte (34) und eine axial äußere Stopfbuchsenplatte (36) aufweist und die Mittel zum Einführen eines Schließfluid eine Fluidleitung (240) aufweisen, die in der äußeren Stopfbuchsenplatte (36) ausgebildet ist, wobei die Fluidleitungsöffnung sich der hinteren Oberfläche (220) des zweiten Dichtungsrings (14) an einem Ende annähert und in Fluidverbindung mit einer Fluidquelle am anderen Ende steht.

15. Mechanische Dichtung nach Anspruch 7, bei welcher die Mittel zur Erzeugung einer hydrodynamischen Fluidkraft zwischen wenigstens einem Teil des zweiten Abschnitts (20b) der ersten Dichtungsstirnringfläche (20) und der zweiten Dichtungsstimringfläche (18) mehrere Pumpnuten (180) aufweist, die in dem zweiten Abschnitt (20b) der ersten Dichtungsstimringfläche (20) ausgebildet sind.

16. Mechanische Dichtung nach Anspruch 15, bei welcher die Mittel (228) zum Einführen eines zweiten Fluid zwischen die erste und zweite Dichtungsstimringfläche das zweite Fluid nach den Nuten (180) fördert und wobei die Nuten und das zweite Fluid die hydrodynamische Fluidkraft erzeugen, um eine Trennung eines Teils der ersten Dichtungsstimringfläche (20) von einem Teil der zweiten Dichtungsstimringfläche (18) während Perioden der Wellendrehung zu bewirken.

17. Mechanische Dichtung nach Anspruch 16, bei welcher die Mittel zum Einführen eines zweiten Fluid mehrere axiale Kanäle (228) aufweisen, die in dem zweiten Dichtungsring (14) ausgebildet sind, wobei jeder Kanal sich nach der zweiten Dichtungsstimringfläche (18) an einem Ende öffnet und in Fluidverbindung mit einer Fluidquelle am anderen Ende steht.

18. Mechanische Dichtung nach Anspruch 17, bei welcher die Mittel zum Einführen eines zweiten Fluid außerdem eine Umfangsnut (234) aufweisen, die in der zweiten Dichtungsstimringfläche (18) ausgebildet ist, wobei die Nut auf der zweiten Dichtungsstimringfläche derart ausgebildet ist, dass die axialen Kanäle (228) sich auf diese Umfangsnut hin öffnen.

19. Mechanische Dichtung nach Anspruch 18, bei welcher die Umfangsnut (234) und die axialen Kanäle (228) auf wenigstens einen Teil der Pumpnuten (180) ausgerichtet sind, die auf dem zweiten Abschnitt (20b) der ersten Dichtungsstimringfläche (20) angeordnet sind, derart, dass die axialen Kanäle und die Umfangsnut das zweite Fluid nach den Pumpnuten liefern, um die hydraulische Fluidkraft zu erzeugen.

20. Mechanische Dichtung nach Anspruch 1, welche außerdem eine Hülse (100) aufweist, um den ersten Dichtungsring (16) oder den zweiten Dichtungsring (14) an der drehbaren Welle (17) festzulegen, wobei die Hülse ein Flanschende (20) aufweist und so bemessen ist, dass sie allgemein konzentrisch auf die drehbare Welle aufsetzbar ist und wobei Mittel (144) vorgesehen sind, um die Hülse auf der Welle festzulegen, damit sich die Hülse mit der Welle dreht.

21. Mechanische Dichtung nach Anspruch 20, bei welcher die Mittel zur Festlegung der Hülse (100) aus einem Verriegelungsring (144) bestehen, der konzentrisch auf der Hülse sitzt und mehrere darin ausgebildete Öffnungen (140) hat, um Befestigungsglieder (142) aufzunehmen, die reibungsschlüssig an der drehbaren Welle angreifen, um den Verriegelungsring und die Hülse daran festzulegen.

22. Mechanische Dichtung nach Anspruch 21, welche außerdem eine Stopfbuchsenanordnung (30) aufweist, die so bemessen ist, dass sie am Gehäuse (11) und um die Welle (12) herum montiert werden kann und die mit dem ersten Dichtungsring (16) oder dem zweiten Dichtungsring (14) gekuppelt ist, um diesen einen der Dichtungsringe mit dem Gehäuse zu verbinden.

23. Mechanische Dichtung nach Anspruch 22, bei welcher der erste Dichtungsring (16) an der Hülse (100) zwecks Drehung mit dieser befestigt ist und der zweite Dichtungsring (14) an der Stopfbuchsenanordnung (30) festgelegt ist.

24. Mechanische Dichtung nach Anspruch 23, welche außerdem einen elastischen Körper (236) aufweist, der zwischen den zweiten Dichtungsring (14) und die Stopfbuchsenanordnung (30) eingefügt ist, um eine Dichtung zwischen dem zweiten Dichtungsring und der Stopfbuchsenanordnung zu schaffen, wobei
Kompressionsmittel (300) vorgesehen sind, um axial und radial den elastischen Körper in Berührung mit dem zweiten Dichtungsring und der Stopfbuchsenanordnung vorzuspannen.

25. Mechanische Dichtung nach Anspruch 24, bei welcher die Kompressionsmittel aus einer ringförmigen Kompressionsplatte (300) bestehen, die einen inneren Ringflanschabschnitt besitzt, um an dem elastischen Körper (236) anzugreifen.

26. Mechanische Dichtung nach Anspruch 25, bei welcher der innere Flanschabschnitt eine axial und radial verlaufende im Winkel angestellte Oberfläche (311) besitzt, um axial und radial den elastischen Körper in Berührung mit dem zweiten Dichtungsring und der Stopfbuchsenanordnung vorzuspannen.

27. Mechanische Gleitringdichtung nach Anspruch 1, bei welcher der erste Dichtungsring (16) eine erste äußere radial verlaufende Dichtungsfläche (20a) an dem ersten Abschnitt der ersten Stimringfläche aufweist und eine zweite innere radial verlaufende Dichtungsstimringfläche (20b) am zweiten Abschnitt der ersten Dichtungsstimringfläche, wobei die erste äußere Dichtungsstimringfläche und die zweite innere Dichtungsstimringfläche allgemein koplanar angeordnet sind.

28. Mechanische Gleitringdichtung nach Anspruch 27, bei welcher die zweite Dichtungsstimringfläche (18) so bemessen ist, dass sie über wenigstens einen Teil der inneren und äußeren Dichtungsstimringflächen (20a, 20b) des ersten Dichtungsrings (16) zu liegen kommt.

29. Mechanische Dichtung gemäß Anspruch 27, bei welcher die erste äußere Dichtungsstimringfläche (20a) längs eines äußeren Umfangsabschnitts der ersten Dichtungsstimringfläche (20) angeordnet ist und die zweite innere Dichtungsstimringfläche (20b) längs eines inneren Umfangsabschnitts der ersten Dichtungsstimringfläche (20) liegt, um eine konzentrische Doppeldichtung auf einem einzigen Dichtungsring zu schaffen.

30. Verfahren zur Verhinderung einer Berührung zwischen den Dichtungsstimringflächen (14, 16) einer mechanischen Dichtung (10), um zwischen einem Gehäuse (11) und einer drehbaren Welle (12) eine Fluidabdichtung herzustellen, wobei die Dichtung einen ersten Dichtungsring (16) mit einer ersten Dichtungsstimringfläche (20) aufweist und die erste Dichtungsstimringfläche einen ersten Abschnitt (20a) und einen zweiten Abschnitt (20b) besitzt, wobei die Dichtung außerdem einen zweiten Dichtungsring (14) mit einer zweiten Dichtungsstimringfläche (18) aufweist und die Dichtungsstimringflächen von erstem und zweitem Dichtungsring im zusammengebauten Zustand einander gegenüberliegen, wobei das Verfahren die folgenden Schritte aufweist:
es wird ein Fluid zwischen die erste Dichtungsstirnringfläche (20) und die zweite Dichtungsstimringfläche (18) eingeführt, um eine hydrostatische Fluidkraft zwischen wenigstens einem Teil der ersten Dichtungsstimringfläche und wenigstens einem Teil der zweiten Dichtungsstimringfläche zu erzeugen;
es wird eine hydrodynamische Fluidkraft zwischen wenigstens einem Teil des zweiten Abschnitts (20b) der ersten Dichtungsstirnringfläche (20) und wenigstens einem Teil der zweiten Dichtungsstimringfläche (18) erzeugt, wobei die hydrodynamische Fluidkraft eine Trennung der Dichtungsstirnringflächen während jener Perioden erzeugt, in denen die Welle mit einer hohen Geschwindigkeit umläuft, und
es wird die hydrostatische Fluidkraft zwischen dem ersten Abschnitt (20a) der ersten Dichtungsstimringfläche (20) und der zweiten Dichtungsstirnringfläche (18) in Perioden erzeugt, in denen die Welle mit geringer Drehzahl umläuft, um eine Berührung zwischen wenigstens einem Teil des ersten Abschnitts von wenigstens einem Teil der zweiten Dichtungsstimringfläche zu verhindern.

31. Verfahren nach Anspruch 39, bei welchem der Schritt der Erhöhung der hydraulischen Fluidkraft zwischen dem ersten Abschnitt (20a) der ersten Dichtungsstirnringfläche (20) und der zweiten Dichtungsstirnringfläche (18) einen weiteren Schritt umfasst, in dem der Druck des zwischen den ersten Abschnitt der ersten Dichtungsstirnringfläche und der zweiten Dichtungsstimringfläche eingeführten Fluids erhöht wird, um die hydrostatische Fluidkraft auf den ersten Abschnitt und auf die zweite Dichtungsstirnringfläche zu erhöhen.

32. Verfahren nach Anspruch 30, bei welchem eine Fluidschließkraft auf eine rückwärtige Oberfläche (220) des zweiten Dichtungsringes (14) ausgeübt wird, um auf einen Teil der zweiten Dichtungsstirnringfläche (18) zu wirken, die den zweiten Abschnitt (20b) der ersten Dichtungsstirnringfläche (20) überlappt.

33. Verfahren nach Anspruch 32, bei welchem weiter eine der primärhydrostatischen Fluidkraft und die Fluidschließkraft eingestellt werden, um eine Berührung zwischen der ersten und der zweiten Dichtungsstimringfläche im Betrieb zu verhindern.

34. Verfahren nach Anspruch 32, bei welchem die hydrostatische Fluidkraft zwischen dem ersten Abschnitt (20a) der ersten Dichtungsstirnringfläche (20) und der zweiten Dichtungsstimringfläche (18) erhöht wird, während die Welle mit geringer Drehzahl umläuft, um eine Trennung wenigstens eines Teils des ersten Abschnitts von wenigstens einem Teil der zweiten Dichtungsstirnringfläche zu bewirken.

35. Mechanische Gleitringdichtung (10) nach Anspruch 1, welche weiter folgende Merkmale aufweist:
eine Vielzahl von Nuten (180) ist in der ersten Dichtungsstimringfläche (20) vorgesehen, um ein Barrierefluid aufzunehmen, das der ersten und der zweiten Dichtungsstimringfläche zugeführt wird, wobei das Barrierefluid deutlich von dem Prozessfluid unterschieden ist und die Vielzahl von Nuten zwischen einem äußeren Bereich und einem inneren Bereich der ersten Dichtungsstimringfläche vorgesehen ist, um zwei konzentrische Dichtungsstimringflächen (20a, 20b) auf der ersten Dichtungsstimringfläche zu schaffen, wobei die zweite Dichtungsstimringfläche so dimensioniert ist, dass sie über den Nuten und über wenigstens einem Teil des inneren Bereiches und über wenigstens einem Teil des äußeren Bereiches liegt, wenn die Dichtung zusammengebaut ist, und
eine Umfangsnut (234) ist in der zweiten Dichtungsstimringfläche (18) ausgebildet, um das Barrierefluid in die Vielzahl von Nuten (180) einzuleiten, die in der ersten Dichtungsstimringfläche (20) ausgebildet sind.

36. Mechanische Dichtung nach Anspruch 35, welche außerdem mehrere axiale Kanäle (228) aufweist, die innerhalb des zweiten Dichtungsrings (14) angeordnet sind, wobei jeder Kanal sich nach der zweiten Dichtungsstimringfläche an einem Ende öffnet und mit dem anderen Ende in Strömungsverbindung mit einer Fluidquelle steht.

37. Mechanische Dichtung nach Anspruch 36, bei welcher die Umfangsnut (234) und die axialen Kanäle (228) auf wenigstens einen Teil der Nuten (180) ausgerichtet sind, die auf der ersten Dichtungsstimringfläche (20) ausgebildet sind, so dass die axialen Kanäle und die Umfangsnut den Nuten ein Fluid liefem.

38. Mechanische Dichtung nach Anspruch 35, welche außerdem eine Hülse (100) aufweist, um den ersten Dichtungsring (16) oder den zweiten Dichtungsring (14) auf der drehbaren Welle (12) festzulegen, wobei die Hülse ein Flanschende (20) besitzt und so bemessen ist, dass sie konzentrisch auf der drehbaren Welle (12) zu liegen kommt, wobei Mittel (144) vorgesehen sind, um die Hülse auf der Welle derart festzulegen, dass sich die Hülse mit der Welle dreht.

39. Mechanische Dichtung nach Anspruch 38, bei welcher die Mittel zur Festlegung der Hülse (100) an der drehbaren Welle (12) einen Verriegelungsring (144) aufweisen, der konzentrisch um die Hülse herum gelagert ist und mehrere Öffnungen (140) aufweist, um Befestigungsglieder (142) aufzunehmen, die reibungsschlüssig an der drehbaren Welle angreifen, um den Verriegelungsring und die Hülse auf der Welle festzulegen.

40. Mechanische Dichtung nach Anspruch 35, welche außerdem eine Stopfbuchsenanordnung (30) besitzt, die so bemessen ist, dass sie auf dem Gehäuse (11) um die Welle (12) herum gelagert und an dem ersten Dichtungsring(16) oder dem zweiten Dichtungsring (14) gekuppelt werden kann, um einen der Dichtungsringe am Gehäuse festzulegen.

41. Mechanische Dichtung nach Anspruch 40, bei welcher die Stopfbuchsenanordnung (30) eine axial innere Stopfbuchsenplatte (34) und eine axial äußere Stopfbuchsenplatte (36) umfasst.

42. Mechanische Dichtung nach Anspruch 41, welche außerdem einen elastischen Körper (56) aufweist, der zwischen der inneren Stopfbuchsenplatte (34) und der äußeren Stopfbuchsenplatte (36) angeordnet ist, um dazwischen eine Dichtung zu bilden.

43. Mechanische Dichtung nach Anspruch 35, welche weiter die folgenden Merkmale aufweist:
eine Stopfbuchsenanordnung (30), die mit dem zweiten Dichtungsring (14) gekuppelt ist, um den Dichtungsring mit dem Gehäuse (11) zu verbinden;
eine Hülse (100), um den ersten Dichtungsring (16) auf der drehbaren Welle (12) festzulegen, wobei die Hülse ein Flanschende (20) besitzt und so bemessen ist, dass sie allgemein konzentrisch um die drehbare Welle herum montiert werden kann,und
ein Verriegelungsring (144), der die Hülse mit der Welle verbindet, damit sich diese mit der Welle dreht.

44. Mechanische Dichtung nach Anspruch 43, welche weiter einen elastischen Körper (226) aufweist, der zwischen dem zweiten Dichtungsring (14) und der Stopfbuchsenanordnung (30) angeordnet ist, um eine Dichtung zwischen dem zweiten Ring und der Stopfbuchsenanordnung herzustellen, und bei welcher
eine Kompressionsplatte (300) vorgesehen ist, um axial und radial den elastischen Körper in Berührung mit dem zweiten Dichtungsring und der Stopfbuchsenanordnung vorzuspannen.

45. Mechanische Dichtung nach Anspruch 44, bei welcher die Kompressionsplatte (300) einen ringförmigen inneren Flanschabschnitt aufweist, um an dem elastischen Körper (226) anzugreifen.

46. Mechanische Dichtung nach Anspruch 45, bei welcher der Flanschabschnitt eine axial und radial im Winkel verlaufende Oberfläche (311) aufweist, um den elastischen Körper (226) axial und radial in Berührung mit dem zweiten Dichtungsring (14) und der Stopfbuchsenanordnung (30) vorzuspannen.

47. Mechanische Dichtung nach Anspruch 35, welche weiter eine Fluidleitung (228) aufweist, die durch den zweiten Dichtungsring (14) hindurchgeht und eine Öffnung an der zweiten Dichtungsstimringfläche aufweist, um mit den Nuten (180) in Verbindung zu gelangen und um das Barrierefluid nach den Nuten zu fördern.

48. Mechanische Dichtung nach den Ansprüchen 35 oder 47, bei welcher das Barrierefluid, welches über die Nuten (180) empfangen wird, eine hydrodynamische und hydrostatische Hubkraft zwischen wenigstens einem Teil der ersten Dichtungsstimringfläche (20) und wenigstens einem Teil der zweiten Dichtungsstimringfläche (18) zu erzeugen, um wenigstens den Teil der ersten Dichtungsstimringfläche von wenigstens dem Teil der zweiten Dichtungsstimringfläche zu trennen.

49. Mechanische Dichtung nach den Ansprüchen 35 oder 48, bei welcher die Druckdifferenz zwischen dem Barrierefluid und dem Prozessfluid eine primäre hydrostatische Fluidkraft zwischen dem äußeren Bereichsabschnitt (20a) der ersten Dichtungsstimringfläche und wenigstens einem Teil der zweiten Dichtungsstimringfläche (18) erzeugt.

50. Mechanische Dichtung nach den Ansprüchen 35 oder 49, welche außerdem ein Druckregelsystem (400) aufweist, um die Trennung der Dichtungsstimringflächen durch Einstellung des Druckes des Barrierefluid einzustellen, das diesen Dichtungsstirnringflächen zugeführt wird.

51. Mechanische Dichtung nach Anspruch 35, welche weiter Mittel (240) aufweist, um ein Schließfluid der hinteren Oberfläche (220) des zweiten Dichtungsringes (14) zuzuführen und um eine Schließkraft auf den zweiten Dichtungsring auszuüben.

52. Mechanische Dichtung nach Anspruch 51, bei welcher die Schließkraft auf einen Teil der zweiten Dichtungsstirnringfläche (18) wirkt, der die Nuten (180) überlappt, welche in der ersten Dichtungsstirnringfläche (20) angeordnet sind.

53. Mechanische Dichtung nach Anspruch 52, bei welcher die Schließkraft auf einen Teil der zweiten Dichtungsstimringfläche (18) wirkt, der den äußeren Bereich (20a) der ersten Dichtungsstimringfläche überlappt.

54. Mechanische Dichtung nach Anspruch 35, bei welcher die Nuten (180), die in der ersten Dichtungsstirnringfläche ausgebildet sind, eine hydrodynamische Fluidkraft und eine hydrostatische Fluidkraft zwischen der ersten Dichtungsstimringfläche (20) und der zweiten Dichtungsstimringfläche (18) erzeugen, um wenigstens einen Teil der ersten Dichtungsstimringfläche von wenigstens einem Teil der zweiten Dichtungsstimringfläche abzuheben.

55. Mechanische Dichtung nach Anspruch 54, welche außerdem eine Fluidleitung (228) aufweist, die durch den zweiten Dichtungsring geführt ist und eine Öffnung an der zweiten Dichtungsstimringfläche aufweist, um mit den Nuten (180) in Verbindung zu gelangen und das Barrierefluid nach den Nuten zu überführen.

56. Mechanische Dichtung nach Anspruch 55, die außerdem eine Stopfbuchsenanordnung (30) aufweist, die mit dem zweiten Dichtungsring (14) gekuppelt ist, um den zweiten Dichtungsring mit dem Gehäuse (11) zu verbinden, wobei die Stopfbuchsenanordnung eine axial innere Stopfbuchsenplatte (34) und eine axial äußere Stopfbuchsenplatte (36) aufweist.

57. Mechanische Dichtung nach Anspruch 56, welche außerdem eine zweite Fluidleitung (240) in der äußeren Stopfbuchsenplatte (36) aufweist, um ein Schließfluid nach einer rückwärtigen Oberfläche (220) des zweiten Dichtungsrings (14) zu überführen, wobei die zweite Fluidleitungsöffnung sich der hinteren Oberfläche des zweiten Dichtungsrings an einem Ende annähert und in Fluidverbindung mit einer Fluidquelle am anderen Ende steht.

58. Mechanische Dichtung nach Anspruch 57, bei welcher die zweite Fluidleitung (240) in der äußeren Stopfbuchsenplatte (36) in Verbindung mit der Fluidleitung (228) in dem zweiten Dichtungsring (14) steht, so dass die zweite Fluidleitung das Fluid von der Fluidquelle nach der Fluidleitung überführt.

59. Verfahren zur Verhinderung einer Berührung zwischen den Dichtungsstimringflächen (18, 20) einer mechanischen Dichtung (10) während des Betriebes des Verfahrens gemäß Anspruch 30, wobei der Schritt der
Erzeugung einer hydrodynamischen Fluidkraft zwischen wenigstens einem Teil des zweiten Abschnitts (20b) der ersten Dichtungsstirnringfläche (20) und wenigstens einem Teil der zweiten Dichtungsstimringfläche (18) weiter die folgenden Merkmale aufweist:
es wird eine hydrostatische Fluidkraft zwischen wenigstens einem Teil des zweiten Abschnitts (20b) der ersten Dichtungsstirnringfläche (20) und wenigstens einem Teil der zweiten Dichtungsstirnringfläche (18) erzeugt und außerdem
eine hydrostatische Fluidkraft zwischen wenigstens einem Teil des zweiten Abschnitts (20b) der ersten Dichtungsstimringfläche (20) und wenigstens einem Teil der zweiten Dichtungsstirnringfläche (18) erzeugt, um eine Trennung des wenigstens einen Teils des zweiten Abschnitts von dem wenigstens einen Teil der zweiten Dichtungsstirnringfläche zu bewirken.

60. Mechanische Gleitringdichtung (10) nach Anspruch 1, welche weiter die folgenden Merkmale aufweist:
eine Stopfbuchsenanordnung (30) zur Kupplung der ersten Dichtung mit dem Gehäuse (11), wobei die Stopfbuchsenanordnung eine innere Oberfläche (74, 76) aufweist;
ein sekundärer Dichtungsaufbau bewirkt eine Fluidabdichtung zwischen dem zweiten Dichtungsring und der Stopfbuchsenanordnung, wobei der sekundäre Dichtungsaufbau die folgenden Merkmale aufweist:
ein Kompressionsglied (300), das eine Frontoberfläche (306) und eine hintere Oberfläche (307) aufweist;
eine Feder (270) zwischen der hinteren Oberfläche (307) des Kompressionsgliedes und der inneren Oberfläche (74, 76) der Stopfbuchsenanordnung, um axial das Kompressionsglied (300) vorzuspannen, und
ein Dichtungskörper (236) ist zwischen der Frontoberfläche (306) des Kompressionsgliedes und der rückwärtigen Oberfläche (220) des ersten Dichtungsrings (14) vorgesehen;
entweder die hintere Oberfläche des ersten Dichtungsringes oder die vordere Oberfläche des Kompressionsgliedes besitzen zwei oder mehrere im Winkel angestellte Oberflächen, und wenigstens zwei der im Winkel angestellten Oberflächen berühren den Dichtungskörper, um eine Dichtungskraft auf den Dichtungskörper auszuüben und eine der wenigstens zwei im Winkel angestellten Oberflächen erstreckt sich allgemein axial und erzeugt eine Axialkraft auf den Dichtungskörper, wobei diese Dichtungskraft den Dichtungskörper in Dichtungseingriff mit dem ersten Dichtungsring (14) und der inneren Oberfläche (71) der Stopfbuchsenanordnung (30) bringt, um einen Fluidleckstrom zwischen dem ersten Dichtungsring und der Stopfbuchsenanordnung zu verhindern.

61. Mechanische Gleitringdichtung nach Anspruch 60, bei welcher die Frontoberfläche (306) des Kompressionsgliedes (300) eine erste Oberfläche (314) und eine zweite Oberfläche (312) aufweist und die erste Oberfläche in einem Winkel gegenüber der zweiten Oberfläche angestellt ist.

62. Mechanische Gleitringdichtung nach Anspruch 61, bei welcher der Winkel zwischen der ersten Oberfläche und der zweiten Oberfläche ein stumpfer Winkel ist.

63. Mechanische Gleitringdichtung nach Anspruch 62, bei welcher die erste Oberfläche (314) sich radial erstreckt und eine allgemein in Achsrichtung verlaufende Kraft auf den Dichtungskörper (236) ausübt.

64. Mechanische Gleitringdichtung nach Anspruch 63, bei welcher die zweite Oberfläche (312) eine radial gerichtete und eine axial gerichtete Kraft auf den Dichtungskörper (236) ausübt.

65. Mechanische Gleitringdichtung nach Anspruch 61, bei welcher die Radialkraft, die auf den Dichtungskörper (236) ausgeübt wird, minimiert wird und der Dichtungskörper (236) in Dichtungsberührung mit der inneren Oberfläche (76) der Stopfbuchsenanordnung (30) durch Wahl des Winkels, der die ersten und zweiten Oberflächen definiert, gehalten wird.

66. Mechanische Gleitringdichtung nach Anspruch 61, bei welcher die rückwärtige Oberfläche des ersten Dichtungsrings und die Frontoberfläche des Kompressionsgliedes eine Kammer (91) zur Aufnahme des Dichtungskörpers bilden, wobei die Kammer so bemessen ist, dass eine thermische Expansion des Dichtungskörpers in Radialrichtung während des Betriebs der Dichtung möglich ist.

67. Mechanische Gleitringdichtung nach Anspruch 61, bei welcher die im Winkel angestellten Oberflächen so orientiert sind, dass sie zusammen mit dem Dichtungskörper eine im Wesentlichen konstante radial nach innen gerichtete Kraft auf den Dichtungskörper (236) unabhängig von der anderen Struktur ausüben.

## Revendications

1. Système de joint mécanique frontal d'étanchéité pour fournir une étanchéité fluide entre un boîtier (11) et un arbre rotatif (12), le boîtier étant exposé à un traitement fluide sous une pression de fluide de traitement, le système de joint d'étanchéité (10) comprenant
un premier joint d'étanchéité (16) ayant un premier joint d'étanchéité frontal (20) s'étendant entre une première (172) et une deuxième surface (164), ledit premier joint d'étanchéité frontal ayant une première partie (20a) et une deuxième partie (20b),
un deuxième joint d'étanchéité (14) ayant un deuxième joint d'étanchéité frontal (18) s'étendant entre une première surface (206) et une deuxième surface (212), lesdits premier et deuxième joints d'étanchéités frontaux étant opposés l'un par rapport à l'autre lorsqu'ils sont assemblés, ladite première surface dudit premier joint d'étanchéité et ladite première surface dudit deuxième joint d'étanchéité étant exposées à un premier fluide à une première pression,
un dudit premier joint d'étanchéité et dudit deuxième joint d'étanchéité étant adapté pour tourner avec l'arbre, l'autre dudit premier et du deuxième joints d'étanchéité retenu de rotation,
un moyen (228) pour introduire un deuxième fluide à une deuxième pression entre le premier et le deuxième joints d'étanchéité frontaux, la différence entre lesdites première et deuxième pression développant une force d'ouverture entre lesdits premier et deuxième joints d'étanchéité frontaux, et ledit système comprenant de plus,
un système régulateur de pression (400) couplé audit joint et ajustant la force d'ouverture comme fonction de la différence entre les pressions dudit premier et dudit deuxième fluides.

2. Joint mécanique d'étanchéité selon la revendication 1, dans lequel ledit premier fluide est le fluide de traitement, et ledit deuxième fluide est une barrière fluide.

3. Joint mécanique d'étanchéité selon la revendication 1 ou la revendication 2, dans lequel la première surface (172) du premier joint d'étanchéité (16) est une surface radiale externe et la première surface (206) du deuxième joint d'étanchéité (14) est une surface externe radiale.

4. Joint mécanique d'étanchéité selon l'une quelconque des revendications précédentes, comprenant de plus un moyen (240) pour développer une force de fermeture sur l'un dudit premier joint d'étanchéité et dudit deuxième joint d'étanchéité.

5. Joint mécanique d'étanchéité selon la revendication 4, dans lequel le système de régulation de pression (400) ajuste le rapport de ladite force d'ouverture à la force de fermeture comme fonction de la différence de pression entre ledit premier fluide et ledit deuxième fluide pour empêcher le contact desdits joints d'étanchéité frontaux et maintenir le fluide d'étanchéité entre le boîtier et l'arbre rotatif.

6. Joint mécanique d'étanchéité selon la revendication 1, constitué de plus
d'un moyen (180) pour produire une force de fluide hydrodynamique entre au moins une partie de ladite deuxième partie (206) dudit premier joint d'étanchéité frontal (20) et dudit deuxième joint d'étanchéité frontal (18), la force du fluide hydrodynamique provoquant la séparation d'une partie dudit premier joint d'étanchéité frontal et d'une partie desdits deuxième joint d'étanchéité frontaux pendant les périodes de rotation de l'arbre.

7. Joint mécanique d'étanchéité selon la revendication 6, dans lequel la différence entre lesdites première et deuxième pressions produit une force de fluide hydrostatique entre au moins une partie dudit premier joint d'étanchéité frontal et dudit deuxième joint d'étanchéité frontal, ledit système de régulation de pression ajustant la force du fluide hydrostatique sur lesdits premier et deuxième joints d'étanchéité frontaux en ajustant la pression du deuxième fluide.

8. Joint mécanique d'étanchéité selon la revendication 7, constitué de plus d'un moyen (240) pour introduire un fluide de fermeture à une pression de fluide de fermeture à une surface arrière (220) du deuxième joint d'étanchéité (14) pour fournir une force de fluide de fermeture sur ledit deuxième joint d'étanchéité.

9. Joint mécanique d'étanchéité selon la revendication 8, dans lequel on configure ledit moyen (240) pour introduire un fluide de fermeture et ledit deuxième joint d'étanchéité (14) de telle façon que la force de fermeture agisse sur une partie du deuxième joint d'étanchéité frontal (18) chevauchant ladite deuxième partie (206) dudit premier joint d'étanchéité frontal (20).

10. Joint mécanique d'étanchéité selon la revendication 9, dans lequel on configure ledit moyen pour introduire un fluide de fermeture et un deuxième joint d'étanchéité de telle façon que la force de fermeture n'agisse pas sur une partie dudit deuxième joint frontal (18) chevauchant ladite première partie (20a) dudit premier joint frontal (20).

11. Joint mécanique d'étanchéité selon la revendication 9, dans lequel ledit système de régulation de pression (400) ajuste ladite force de fermeture en ajustant la pression du fluide de fermeture.

12. Joint mécanique d'étanchéité selon la revendication 11, dans lequel ledit système de régulation de pression (400) équilibre la force de fermeture avec la somme de ladite force de fluide hydrostatique et ladite force de fluide hydrodynamique pour neutraliser le contact desdits joints d'étanchéité frontaux pendant l'opération et maintient le fluide d'étanchéité entre le boîtier et l'arbre rotatif.

13. Joint mécanique d'étanchéité selon la revendication 9, dans lequel ledit système de régulation de pression ajuste la force de fluide hydrostatique sur lesdits premier et deuxième joints d'étanchéité frontaux en ajustant la pression dudit deuxième fluide ou ajuste ladite force de fermeture en ajustant la pression du fluide de fermeture.

14. Joint mécanique d'étanchéité selon la revendication 8, constitué de plus d'un ensemble de fouloir (30) couplé audit deuxième joint d'étanchéité (14) pour relier ledit deuxième joint d'étanchéité audit boîtier (11), ledit ensemble de fouloir comprenant une plaque de fouloir axialement intérieure (34) et une plaque de fouloir axialement extérieure (36), et dans lequel ledit moyen pour introduire un fluide de fermeture est constitué d'un conduit de fluide (240) formé dans ladite plaque de fouloir extérieure (36), ladite ouverture de conduit de fluide étant près de ladite surface arrière (220) dudit deuxième joint d'étanchéité (14) à une extrémité et étant en communication fluide avec une source de fluide à l'autre extrémité.

15. Joint mécanique d'étanchéité selon la revendication 7, dans lequel ledit moyen pour produire une force fluide hydrodynamique entre au moins une partie de ladite deuxième partie (20b) dudit premier joint d'étanchéité frontal (20) et ledit deuxième joint d'étanchéité frontal (18) comprend une pluralité de gorges de pompage (180) formées dans ladite deuxième partie (20b) dudit premier joint d'étanchéité frontal (20).

16. Joint mécanique d'étanchéité selon la revendication 15, dans lequel ledit moyen (228) pour introduire un deuxième fluide entre le premier et le deuxième joints d'étanchéité frontaux introduit ledit deuxième fluide à ladite pluralité de gorges (180) et dans lequel lesdites gorges et ledit deuxième fluide génère que ladite force de fluide hydrodynamique provoque la séparation d'une partie d'une partie dudit joint d'étanchéité frontal (20) et d'une partie dudit deuxième joint d'étanchéité frontal (18) pendant les périodes de rotation d'arbre.

17. Joint mécanique d'étanchéité selon la revendication 16, dans lequel ledit moyen pour introduire un deuxième fluide comprend une pluralité de passages axiaux (228), formé dans ledit deuxième joint d'étanchéité (14), chaque passage ouvrant sur ledit deuxième joint d'étanchéité frontal (18) à une extrémité et étant en communication fluide avec une source de fluide à l'autre extrémité.

18. Joint mécanique d'étanchéité selon la revendication 17, dans lequel ledit moyen pour introduire un deuxième fluide comprend de plus une gorge circonférentielle (234) formée dans ledit deuxième joint frontal (18), ladite gorge étant placée sur ledit deuxième joint frontal de telle façon que lesdits passages axiaux (228) s'ouvre sur ladite gorge circonférentielle.

19. Joint mécanique d'étanchéité selon la revendication 18, dans lequel ladite gorge circonférentielle (234) et lesdits passages axiaux (228) sont en concordance avec au moins une partie desdites gorges de pompage (180) formées sur ladite deuxième partie (20b) dudit premier joint d'étanchéité frontal (20), de telle façon que lesdits passages axiaux et ladite gorge circonférentielle fournisse ledit deuxième fluide auxdites gorges de pompage pour générer ladite force de fluide hydrodynamique.

20. Joint mécanique d'étanchéité selon la revendication 1, constitué de plus d'un manchon (100) pour fixer un dudit premier joint d'étanchéité (16) et dudit deuxième joint d'étanchéité (14) à l'arbre rotatif (17), ledit manchon ayant une extrémité de raccordement (20) et étant calibré pour être monté de façon généralement concentrique autour de l'arbre rotatif, et un moyen (144) pour fixer ledit manchon à l'arbre pour tourner avec lui.

21. Joint mécanique d'étanchéité selon la revendication 20, dans lequel ledit moyen pour fixer ledit manchon (100) est constitué d'un anneau annulaire de verrouillage (144) monté de façon concentrique autour dudit manchon et ayant une pluralité d'ouvertures (140) formées à l'intérieur pour recevoir des boulons (142) qui s'engage en force dans l'arbre rotatif pour y fixer ledit anneau de verrouillage et ledit manchon.

22. Joint mécanique d'étanchéité selon la revendication 21, constitué de plus d'un ensemble de fouloir (30) calibré pour être monté sur le boîtier (11) et autour de l'arbre (12) et couplé à un dudit premier joint d'étanchéité (16) et dudit deuxième joint d'étanchéité (14) pour relier ledit un desdits joints d'étanchéité audit boîtier.

23. Joint mécanique d'étanchéité selon la revendication 22, dans lequel on fixe ledit premier joint d'étanchéité (16) audit manchon (100) pour tourner avec celui-ci, et on fixe ledit deuxième joint d'étanchéité (14) audit ensemble de fouloir (30).

24. Joint mécanique d'étanchéité selon la revendication 23, constitué de plus d'un élément élastique (236) interposé entre ledit deuxième joint d'étanchéité (14) et ledit ensemble de fouloir (30) pour fournir une étanchéité entre ledit deuxième joint d'étanchéité et ledit ensemble de fouloir, et
un moyen de compression (300) pour mettre en contact en biais axialement et radialement ledit élément élastique avec ledit deuxième joint d'étanchéité et ledit ensemble de fouloir.

25. Joint mécanique d'étanchéité selon la revendication 24, dans lequel ledit moyen de compression comprend une plaque de compression annulaire (300) ayant une partie de raccordement annulaire intérieure pour engager ledit élément élastique (236).

26. Joint mécanique d'étanchéité selon la revendication 25, dans lequel ladite partie de raccordement intérieure comprend une surface inclinée s'étendant axialement et radialement (311) pour mettre en contact en biais axialement et radialement ledit élément élastique avec ledit deuxième joint d'étanchéité et ledit ensemble de fouloir.

27. Joint mécanique d'étanchéité selon la revendication 1, dans lequel ledit premier joint d'étanchéité (16) a un premier joint d'étanchéité frontal extérieur (20a) s'étendant radialement à ladite première partie dudit premier joint d'étanchéité frontal, et un deuxième joint d'étanchéité frontal intérieur (20b) s'étendant radialement à ladite deuxième partie dudit premier joint d'étanchéité frontal, ledit premier joint d'étanchéité frontal externe et ledit deuxième joint d'étanchéité frontal interne étant généralement coplanaires.

28. Joint mécanique d'étanchéité selon la revendication 27, dans lequel on calibre le deuxième joint d'étanchéité frontal (18) pour recouvrir au moins une partie desdits joints d'étanchéité frontaux intérieur et extérieur (20a, 20b) dudit premier joint d'étanchéité (16).

29. Joint mécanique d'étanchéité selon la revendication 27, dans lequel on place ledit premier joint d'étanchéité frontal extérieur (20a) le long d'une partie extérieure circonférentielle dudit premier joint d'étanchéité frontal (20) et on dispose ledit deuxième joint d'étanchéité frontal intérieur (20b) le long d'une partie intérieure circonférentielle dudit premier joint d'étanchéité frontal (20) pour former un joint d'étanchéité concentrique sur un seul joint d'étanchéité.

30. Procédé pour empêcher le contact entre les joints d'étanchéité frontaux (14, 16) d'un joint mécanique d'étanchéité (10) pour fournir un fluide d'étanchéité entre un boîtier (11) et un arbre rotatif (12), le joint comprenant un premier joint d'étanchéité (16) ayant un premier joint d'étanchéité frontal (20), le premier joint d'étanchéité frontal ayant une première partie (20a) et une deuxième partie (20b), et un deuxième joint d'étanchéité (14) ayant un deuxième joint d'étanchéité frontal (18), les joints d'étanchéité frontaux des premier et deuxième joints d'étanchéité étant opposés l'un à l'autre lorsqu'ils sont assemblés, le procédé comprenant les étapes,
d'introduction d'un fluide entre le premier joint d'étanchéité (20) et le deuxième joint d'étanchéité (18) pour produire une force de fluide hydrostatique entre au moins une partie du premier joint d'étanchéité frontal et au moins une partie du deuxième joint d'étanchéité frontal,
de production d'une force de fluide hydrodynamique entre au moins une partie de la deuxième partie (20b) du premier joint d'étanchéité frontal (20) et au moins une partie du deuxième joint d'étanchéité frontal (18), la force de fluide hydrodynamique provoquant la séparation des joints d'étanchéité frontaux pendant les périodes de vitesse élevé de rotation de l'arbre, et
d'augmentation de la force de fluide hydrodynamique entre la première partie (20a) du premier joint d'étanchéité (20) et du deuxième joint d'étanchéité (18) pendant les périodes de faible rotation de l'arbre pour empêcher le contact entre au moins une partie de la première partie à partir d'au moins une partie du deuxième joint d'étanchéité frontal.

31. Procédé selon la revendication 30, dans lequel l'étape d'augmentation de la force de fluide hydrostatique entre la première partie (20a) du premier joint frontal (20) et le deuxième joint frontal (18) comprend l'étape d'augmentation de la pression du fluide que l'on introduit entre la première partie du premier joint d'étanchéité frontal et le deuxième joint d'étanchéité pour augmenter la force de fluide hydrostatique sur la première partie et le deuxième joint d'étanchéité frontal.

32. Procédé selon la revendication 30, comprenant de plus la production d'une force de fluide de fermeture sur une surface arrière (220) du deuxième joint d'étanchéité (14) pour agir sur une partie du deuxième joint d'étanchéité frontal (18) chevauchant la deuxième partie (20b) du premier joint d'étanchéité frontal (20).

33. Procédé selon la revendication 32, comprenant de plus l'ajustement de l'une des forces hydrostatiques primaires et de la force de fluide de fermeture pour empêcher le contact entre le premier et le deuxième joint d'étanchéité frontaux pendant l'opération.

34. Procédé selon la revendication 32, comprenant de plus l'augmentation de la force de fluide hydrostatique entre la première partie (20a) du premier joint d'étanchéité frontal (20) et le deuxième joint d'étanchéité frontal (18) pendant les périodes de faible vitesse de rotation de l'arbre pour provoquer la séparation d'au moins une partie de la première partie d'au moins une partie du deuxième joint d'étanchéité frontal.

35. Joint mécanique d'étanchéité (10) selon la revendication 1, comprenant de plus
une pluralité de gorges (180) formées dans ledit joint d'étanchéité frontal (20) pour recevoir une barrière fluide que l'on introduit dans ledit premier et ledit deuxième joints d'étanchéité frontaux, ladite barrière fluide étant distincte dudit fluide de traitement, ladite pluralité de gorges étant placée entre une plage extérieure et une plage intérieure dudit premier joint d'étanchéité frontal pour former deux joints d'étanchéité concentriques frontaux (20a, 20b) sur ledit premier joint d'étanchéité frontal, et ledit deuxième joint d'étanchéité frontal étant dimensionné pour reposer au-dessus desdites gorges et au moins une partie de ladite plage intérieur et au moins une partie de ladite plage extérieure lorsqu'ils sont assemblés, et
une gorge circonférentielle (234) formée dans ledit deuxième joint d'étanchéité frontal (18) pour introduire ladite barrière fluide dans ladite pluralité de gorges (180) formée dans ledit premier joint d'étanchéité frontal (20).

36. Joint mécanique d'étanchéité selon la revendication 35, comprenant de plus une pluralité de passages axiaux (228) formés dans ledit deuxième joint d'étanchéité (14), chaque passage ouvrant sur ledit deuxième joint d'étanchéité frontal à une extrémité et étant en communication fluide avec une source de fluide à une autre extrémité.

37. Joint mécanique d'étanchéité selon la revendication 36, dans lequel ladite gorge circonférentielle (234) et lesdits passages axiaux (228) sont en concordance avec au moins une partie desdites gorges (180) formées sur ledit premier joint d'étanchéité frontal (20) de telle façon que lesdits passages axiaux et ladite gorge circonférentielle fournissent le fluide auxdites gorges.

38. Joint mécanique d'étanchéité selon la revendication 35, comprenant de plus un manchon (100) pour fixer un dudit premier joint d'étanchéité (16) et ledit deuxième joint d'étanchéité (14) à l'arbre rotatif (12), ledit manchon ayant une extrémité de raccordement (20) et étant calibré pour être monté de façon généralement concentrique autour de l'arbre rotatif (12), et un moyen (144) pour fixer ledit manchon à l'arbre pour tourner avec lui.

39. Joint mécanique d'étanchéité selon la revendication 38, dans lequel ledit moyen pour fixer ledit manchon (100) audit arbre rotatif (12) comprend un anneau de verrouillage annulaire (144) monté concentriquement autour dudit manchon et ayant une pluralité d'ouvertures (140) formées à l'intérieur pour recevoir des attaches (142) qui s'engagent à force dans l'arbre rotatif pour y fixer ledit anneau de verrouillage et ledit manchon.

40. Joint mécanique d'étanchéité selon la revendication 35, comprenant de plus un ensemble de fouloir (30) calibré pour être monté sur le boîtier (11) autour de l'arbre (12) et couplé à l'un dudit premier joint d'étanchéité (16) et dudit deuxième joint d'étanchéité (14) pour relier ledit un desdits joints d'étanchéité audit boîtier.

41. Joint mécanique d'étanchéité selon la revendication 40, dans lequel ledit ensemble de fouloir (30) est constitué d'une plaque de fouloir intérieure axiale (34) et d'une plaque de fouloir extérieure axiale (36).

42. Joint mécanique d'étanchéité selon la revendication 41, comprenant de plus un élément flexible (56) interposé entre ladite plaque de fouloir intérieure (34) et ladite plaque de fouloir extérieure (36) pour former un joint entre elles.

43. Joint mécanique d'étanchéité selon la revendication 35, comprenant de plus
un ensemble de fouloir (30) couplé audit deuxième joint d'étanchéité (14) pour relier ledit joint d'étanchéité audit boîtier (11),
un manchon (100) pour fixer ledit premier joint d'étanchéité (16) à l'arbre rotatif (11), ledit manchon ayant une extrémité de raccordement (20) et étant calibré pour être monté généralement concentriquement autour de l'arbre rotatif, et
un anneau de verrouillage (144) pour fixer ledit manchon à l'arbre pour qu'il tourne avec celui-ci.

44. Joint mécanique d'étanchéité selon la revendication 43, comprenant de plus un élément flexible (226) interposé entre ledit deuxième joint d'étanchéité (14) et ledit ensemble de fouloir (30) pour fournir un joint d'étanchéité entre ledit deuxième anneau et ledit ensemble de fouloir, et
une plaque de compression (300) pour biaiser axialement et radialement ledit élément flexible en contact avec ledit deuxième joint d'étanchéité et ledit ensemble de fouloir.

45. Joint mécanique d'étanchéité selon la revendication 44, dans lequel ladite plaque de compression (300) comprend une partie annulaire intérieure de raccordement pour engager ledit élément flexible (226).

46. Joint mécanique d'étanchéité selon la revendication 45, dans lequel ladite partie intérieure de raccordement comprend une surface inclinée (311) s'étendant axialement et radialement pour biaise axialement et radialement ledit élément flexible (226) en contact avec ledit deuxième joint d'étanchéité (14) et ledit ensemble de fouloir (30).

47. Joint mécanique d'étanchéité selon la revendication 35, comprenant de plus un conduit de fluide (228) formé à travers ledit deuxième joint d'étanchéité (14), ledit conduit de fluide ayant une ouverture audit deuxième joint d'étanchéité frontal pour communiquer avec ladite pluralité de gorges (180) pour fournir ladite barrière de fluide auxdites gorges.

48. Joint mécanique d'étanchéité selon les revendications 35 ou 47, dans lequel ladite barrière de fluide reçue par lesdites gorges (180) génère une force d'élévation hydrodynamique et hydrostatique entre au moins une partie dudit premier joint d'étanchéité frontal (20) et au moins une partie dudit deuxième joint d'étanchéité frontal (18) pour séparer au moins ladite partie dudit premier joint d'étanchéité frontal d'au moins ladite partie dudit deuxième joint d'étanchéité frontal.

49. Joint mécanique d'étanchéité selon les revendications 35 ou 48, dans lequel la différence de pression entre ladite barrière de fluide et ledit fluide de traitement produit une force de fluide hydrostatique primaire entre ladite partie de plage extérieure (20a) dudit premier joint d'étanchéité frontal et au moins une partie dudit deuxième joint d'étanchéité frontal 18.

50. Joint mécanique d'étanchéité selon les revendications 35 ou 49, comprenant de plus un système de régulation de pression (400) pour contrôler ladite séparation desdits joints d'étanchéité frontaux en ajustant la pression de ladite barrière de fluide introduite dans lesdits joints d'étanchéité frontaux.

51. Joint mécanique selon la revendication 35, comprenant de plus un moyen (240) pour introduire un fluide de fermeture à une surface arrière (220) dudit deuxième joint d'étanchéité (14) pour fournir une force de fermeture sur ledit deuxième joint d'étanchéité.

52. Joint mécanique d'étanchéité selon la revendication 51, dans lequel ladite force de fermeture agit sur une partie dudit deuxième joint d'étanchéité frontal (18) chevauchant ladite pluralité de gorges (180) formées dans ledit joint d'étanchéité frontal (20).

53. Joint mécanique d'étanchéité selon la revendication 52, dans lequel ladite force de fermeture n'agit pas sur une partie dudit deuxième joint d'étanchéité frontal (18) chevauchant ladite plage extérieure (20a) dudit premier joint d'étanchéité frontal.

54. Joint mécanique selon la revendication 35, dans lequel la pluralité de gorges (180) formée dans ledit premier joint d'étanchéité frontal produit une force de fluide hydrodynamique et une force de fluide hydrostatique entre ledit premier joint d'étanchéité frontal (20) et ledit deuxième joint d'étanchéité frontal (18) pour provoquer le fonctionnement d'au moins une partie dudit premier joint d'étanchéité frontal depuis au moins une partie dudit deuxième joint d'étanchéité frontal.

55. Joint mécanique d'étanchéité selon la revendication 54, comprenant de plus un conduit de fluide (228) formé à travers ledit deuxième joint d'étanchéité, ledit conduit de fluide (228) ayant une ouverture audit deuxième joint d'étanchéité frontal pour communiquer avec ladite pluralité de gorges (180) pour fournir ladite barrière de fluide auxdites gorges.

56. Joint mécanique d'étanchéité selon la revendication 55, comprenant de plus un ensemble de fouloir (30) couplé audit deuxième joint d'étanchéité (14) pour relier ledit deuxième joint d'étanchéité audit boîtier (11), ledit ensemble de fouloir comprenant une plaque de fouloir intérieure axiale (34) et une plaque de fouloir extérieure axiale (36).

57. Joint mécanique d'étanchéité selon la revendication 56, comprenant de plus un deuxième conduit de fluide (240) formé dans ladite plaque de fouloir extérieure (36), pour introduire un fluide de fermeture à une surface arrière (220) dudit deuxième joint d'étanchéité (14), ledit deuxième conduit de fluide s'ouvrant près de ladite surface arrière dudit deuxième joint d'étanchéité à une extrémité et étant en communication de fluide avec une source de fluide à l'autre extrémité.

58. Joint mécanique d'étanchéité selon la revendication 57, dans lequel ledit conduit de fluide (240) formé dans ladite plaque de fouloir extérieure (36) est en communication de fluide avec ledit conduit de fluide (228) formé dans ledit deuxième joint d'étanchéité (14) de telle façon que ledit deuxième conduit fournisse le fluide à partir de ladite source de fluide audit conduit de fluide.

59. Procédé pour empêcher le contact entre les joints d'étanchéité frontaux (18, 20) d'un joint mécanique d'étanchéité (10) pendant le fonctionnement du procédé selon la revendication 30, dans lequel l'étape de
production d'une force de fluide hydrodynamique entre au moins une partie de la deuxième partie (20b) du premier joint d'étanchéité frontal (20) et au moins une partie du deuxième joint d'étanchéité frontal (18) comprend aussi
la production d'une force de fluide hydrostatique entre au moins une partie de la deuxième partie (20b) du premier joint d'étanchéité frontal (20) et au moins une partie du deuxième joint d'étanchéité frontal (18) comprend aussi
la production d'une force de fluide hydrostatique entre au moins une partie de la deuxième partie (20b) du premier joint d'étanchéité frontal (20) et au moins une partie d'au moins une partie du deuxième joint d'étanchéité frontal (18).

60. Joint mécanique d'étanchéité frontal (10) selon la revendication 1, comprenant de plus
un ensemble de fouloir (30) pour relier ledit premier joint d'étanchéité audit boîtier (11), l'ensemble de fouloir ayant une surface intérieure (74, 76), et
un ensemble d'étanchéité secondaire pour fournir un fluide d'étanchéité entre ledit deuxième joint d'étanchéité et ledit ensemble de fouloir, ledit ensemble d'étanchéité secondaire comprenant
un élément de compression (300) ayant une surface frontale (306) et une surface arrière (307)
un ressort (270) placé entre ladite surface arrière (307) dudit élément de compression et la surface intérieure (74, 76) de l'ensemble de fouloir pour biaiser axialement ledit élément de compression (300), et
un élément d'étanchéité (236) interposé entre ladite surface frontale (306) dudit élément de compression et ladite surface arrière (220) dudit premier joint d'étanchéité (14),
une de ladite surface arrière dudit premier joint d'étanchéité et de ladite surface frontale dudit élément de compression ayant deux ou plusieurs surfaces inclinées, au moins deux desdites surfaces inclinées en contact avec l'élément d'étanchéité pour communiquer une force d'étanchéité audit élément d'étanchéité, un desdits au moins deux surfaces inclinées s'étendant et communiquant une force généralement axiale audit élément d'étanchéité, ladite force d'étanchéité plaçant ledit élément d'étanchéité en engagement d'étanchéité avec ledit premier joint d'étanchéité (14) et ladite surface intérieure (71) de l'ensemble de fouloir (30) pour éviter une fuite de fluide entre ledit premier joint d'étanchéité et ledit ensemble de fouloir.

61. Joint mécanique d'étanchéité frontal selon la revendication 60, dans lequel la surface frontale (306) de l'élément de compression (300) comprend une première surface (314) et une deuxième surface (312), ladite première surface étant orientée selon un angle vers ladite deuxième surface.

62. Joint mécanique d'étanchéité frontal selon la revendication 61, dans lequel ledit angle entre ladite première surface et ladite deuxième surface comprend un angle obtus.

63. Joint mécanique d'étanchéité frontal selon la revendication 62, dans lequel ladite première surface (314) s'étend radialement et communique une force généralement axiale audit élément d'étanchéité (236).

64. Joint mécanique d'étanchéité selon la revendication 63, dans lequel ladite deuxième surface (312) communique une force radiale et axiale audit élément d'étanchéité (236).

65. Joint mécanique d'étanchéité frontal selon la revendication 61, dans lequel la force radiale communiquée audit élément d'étanchéité (236) est diminuée et ledit élément d'étanchéité (236) est maintenu en contact d'étanchéité avec ladite surface intérieure (76) dudit ensemble de fouloir (30) en choisissant l'angle défini par lesdites première et deuxième surfaces.

66. Joint mécanique d'étanchéité frontal selon la revendication 61, dans lequel ladite surface arrière dudit premier joint d'étanchéité et ladite surface frontale dudit élément de compression forment une chambre (91) pour recevoir ledit élément d'étanchéité, ladite chambre étant calibrée pour permettre une expansion thermique dudit élément d'étanchéité dans le sens radial pendant l'opération d'étanchéité.

67. Joint mécanique d'étanchéité frontal selon la revendication 61, dans lequel on oriente lesdites surfaces inclinées pour former en association avec l'élément d'étanchéité une force sensiblement constante radialement sur ledit élément d'étanchéité (236) indépendante de l'autre structure.
